(19) Europäisches Patentamt
European Patent Office
Office européen des brevets

(11) EP 4 328 206 A1

(12) EUROPEAN PATENT APPLICATION
published in accordance with Art. 153(4) EPC

(43) Date of publication:
**28.02.2024 Bulletin 2024/09**

(21) Application number: **22791759.8**

(22) Date of filing: **20.04.2022**

(51) International Patent Classification (IPC):
***C04B 26/18*** *(2006.01)* ***C04B 22/06*** *(2006.01)*
***C04B 22/14*** *(2006.01)* ***C08F 290/06*** *(2006.01)*
***E21D 11/04*** *(2006.01)*

(52) Cooperative Patent Classification (CPC):
**C04B 22/06; C04B 22/14; C04B 26/18; C08F 290/06; E21D 11/04**

(86) International application number:
**PCT/JP2022/018284**

(87) International publication number:
**WO 2022/224988 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2021 JP 2021073533**

(71) Applicant: **Resonac Corporation**
**Tokyo 105-8518 (JP)**

(72) Inventors:
- **SAKAGUCHI, Yoichiro**
  **Tokyo 105-8518 (JP)**
- **SAITO, Kohei**
  **Tokyo 105-8518 (JP)**

(74) Representative: **Strehl Schübel-Hopf & Partner**
**Maximilianstrasse 54**
**80538 München (DE)**

# (54) RECESS FILLING MATERIAL KIT, CURED PRODUCT OF SAME, AND RECESS FILLING METHOD

(57) The invention provides a recess filling material kit, a cured product thereof, and a recess filling method using the same, which can provide a method for eliminating construction defects such as defects in initial bonding with concrete and steel materials used in recesses. The recess filling material kit of the present invention contains first and second radically polymerizable resin compositions. The first radically polymerizable resin composition contains a first radically polymerizable compound (A-1), a first radically polymerizable unsaturated monomer (B-1), an acidic compound (C), and a first radical polymerization initiator (D-1); and the second radically polymerizable resin composition contains a second radically polymerizable compound (A-2), a second radically polymerizable unsaturated monomer (B-2), a second radical polymerization initiator (D-2), an expansive additive (J), and an aggregate (K).

EP 4 328 206 A1

## Description

BACKGROUND

[Technical Field]

The present invention relates to a recess filling material kit, a cured product thereof and a recess filling method. The present invention also relates to a resin mortar-filling method for filling in a recess for connecting bolts opened at a periphery of a segment used as a material in the construction of subway passages, sewer lines, and assembly lines such as electric wires and gas pipes, which are underground pipelines; or in a recess containing a worn or damaged reinforcing steel structure.

The application claims priority under Japanese Patent Application No. 2021-073533 filed on April 23, 2021, the contents of which are hereby incorporated herein.

[Background Technology]

When constructing subway passages, sewer lines, and assembly lines such as electric wires and gas pipes, which are underground pipelines, a vertical hole is drilled to a specified depth, an apparatus is brought in to form a specified horizontal hole, and the apparatus is operated to form the horizontal hole while connecting segments sequentially to construct a pipeline with a specified diameter. For this segment, the larger the pipe diameter, the deeper the excavation depth, and the more fragile the ground, the higher the strength is of segment used. This segment is generally made of precast concrete, iron, and the like, and a recess (bolt box, box cutout) for connection is formed on an inner periphery of the segment, the segment is placed so that the recesses are adjacent to each other, and the segment is connected by bolts and nuts and PC steel. A large number of these recesses, along with bolts and nuts exist in proportion to the size of the diameter of a conduit and the length of the conduit.

If the pipe line is used with this recess exposed, the bolt and nut parts will corrode due to various elements in the environment, so the mortar-filling method was used to prevent the corrosion of the bolt and nut by filling this recess with cement mortar, epoxy resin mortar, polyurethane resin, and the like, thereby preventing the deterioration of the strength of joints.

However, with the mortar filling method, which was carried out at the time of construction, deterioration has occurred due to years of use, and various materials used at the time of construction have been missing or completely lost (fallen off, and the like), and there have been signs of corrosion of the nuts and bolts inside.

If the corroded bolts and nuts are left as they are, the connection between the connected pipes will become weak, causing frequent problems such as groundwater seeping in through gaps between the segments or fluid flowing through the pipes escaping. In addition, bolt boxes in which material used in the mortar filling method is missing or becomes completely lost also increase the resistance of fluid flowing through the pipeline, so immediate action is required.

In addition, the same problem related to the repair of these recesses is age-related deterioration of subway roads, sewer lines, and assembly lines such as electric wires and gas lines, which include reinforcing steel structures and were built underground in urban areas. Due to this age-related deterioration, there are countless cracks and breakages in the assembly line, exposing the reinforcing steel and causing various problems such as seepage of groundwater or river water into the line or discharge of sewage from the line. Therefore, immediate action is required. However, construction work often fails with existing materials, such as bonding with reinforcing steels and concrete structures, and limited available construction time presents a problem unique to underground structures.

As possible applications of this mortar filling method, there are known cases such as a quick-setting mortar method in which quick-setting mortar mixed with a quick-setting agent is hand-packed or sprayed as shown in Patent Document 1; a lightweight mortar method in which lightweight mortar with reduced specific gravity is hand-packed as shown in Patent Document 2; and a cured foamed urethane construction method in which two-liquid curing and foaming type urethane composition are injected and filled as shown in Patent Document 3; as well as a case in which epoxy resin mortar is used for filling recesses as shown in Patent Document 4; and a case in which epoxy resin is mixed with water and emulsified as shown in Patent Document 5.

However, none of the materials can solve all problems at the same time, such as bonding to reinforcing steels, bolts, and concrete structures, as well as shrinkage of the materials due to aging, and there are always concerns about a problem such as re-deterioration of repair sites.

On the other hand, in the resin mortar-filling method, a radically polymerizable resin composition is often used. For example, during polymerization of a common liquid vinyl monomer, a very large shrinkage occurs. This shrinkage causes problems such as insufficient strength when vinyl monomer is used for a recess filler. Therefore, it is of great industrial significance to create resins with small shrinkage rates during polymerization.

Radically polymerizable resin compositions such as unsaturated polyester resins and vinyl ester resins (epoxy

acrylates) also usually experience shrinkage during curing. Since the monomers listed in Table 1 of Non-Patent Document 1, such as "styrene" and "methyl methacrylate," are often used as monomers, unsaturated polyester resins and vinyl ester resins in general formulations have about 8% to 12% and 8% to 10% volumetric shrinkage, respectively.

That is a much larger number even compared to the 3% to 6% volumetric shrinkage expected from a typical epoxy. This has prevented the use of unsaturated polyester or vinyl ester resins in industrial applications or in other industries and applications.

As a way to solve this problem, Patent Document 6 states that by using polystyrene beads as a low-shrinkage material, it is possible to produce a low-shrinkage unsaturated polyester resin composition with excellent low-shrinkage, dimensional stability and surface smoothness by reducing the workload of manufacturing or shortening the manufacturing time.

In addition, Patent Document 7 states that by blending an A-B type block copolymer with an unsaturated polyester resin composition, a low-shrinkage unsaturated polyester resin composition that can produce a molded product with low shrinkage during curing and excellent heat resistance can be obtained.

In addition, Patent Document 8 states that, for an unsaturated polyester resin, by mixing A-B type block copolymers (vinyl acetate-styrene type) containing segments A and B with fine particle silicic acid, a low-shrinkage unsaturated polyester resin composition having a large low-shrinkage effect during cold or medium temperature molding and a high level of water resistance can be obtained.

[Prior Art Documents]

[Patent Documents]

Patent Document 1: Japanese Patent No. 2700609
Patent Document 2: Japanese Patent Application Laid-Open No. 2001-270765
Patent Document 3: Japanese Patent No. 3479819
Patent Document 4: Japanese Patent Application Laid-Open No. 2020-94192
Patent Document 5: Japanese Patent Application Laid-Open No. 2019-52203
Patent Document 6: Japanese Patent Application Laid-Open No. Hei 11-315198
Patent Document 7: Japanese Patent No. 2794802
Patent Document 8: Japanese Patent Application Laid-Open No. Hei 05-222282

[Non-Patent Documents]

Non-Patent Document 1: Takeshi Endo, Possibility to Avoid Shrinkage during Polymerization, Kobunshi, Volume 27, Issue 2, Pages 108-111 (1978).

SUMMARY

(Problems to Be Solved by Invention)

The present invention has been made in view of the above conventional circumstances, and can provide methods for eliminating construction defects such as defects in initial bonding with materials used in various mortar filling methods, such as cement concrete materials, polymer cement mortar materials, two-part curing/foaming type urethane compositions, and epoxy resin mortar materials; defects in initial bonding with concrete materials and steel materials used in recesses; and defects due to falling off due to shrinkage during curing of resin materials.

In addition, in conventional radically polymerizable resin compositions, single formulations of thermoplastic resins such as polystyrene, or two or more block copolymers are used to create resins with low shrinkage rates. Most of them functioned as "shrinkage preventive material".

These resin compositions were based on the idea of offsetting the thermal expansion of thermoplastic resins due to curing heat and curing shrinkage of unsaturated polyester resins, and their applications were often limited to sheet molding compound (SMC), bulk molding compound (BMC), and other applications in which heat molding is performed above a mid-temperature range.

The present invention has been made in view of the above conventional circumstances, and it is an object of the present invention to provide a recess filling material kit containing a radically polymerizable resin composition with a low shrinkage ratio, a cured product thereof, and a recess filling method using the same, without being limited to a molding method, a use temperature, an application, and the like, by incorporating an expansive additive, not a shrinkage

preventive material, and then stabilizing it, without being limited to the molding method, the use temperature, the application, and the like, and at the same time, by using a primer for metal bonding, bonding to a reinforcing steel structure, bolt, and the like present in the recess can also be secured.

[Means to Solve Problems]

That is, the present invention is represented by the following [1] to [14].

[1] A recess filling material kit, comprising a first radically polymerizable resin composition and a second radically polymerizable resin composition,

wherein the first radically polymerizable resin composition comprises a first radically polymerizable compound (A-1), a first radically polymerizable unsaturated monomer (B-1), an acidic compound (C), and a first radical polymerization initiator (D-1),
the second radically polymerizable resin composition comprises a second radically polymerizable compound (A-2), a second radically polymerizable unsaturated monomer (B-2), a second radical polymerization initiator (D-2), an expansive additive (J), and an aggregate (K).

[2] The recess filling material kit according to [1], wherein the amount of the aggregate (K) is 200 to 900 parts by mass with respect to a total of 100 parts by mass of the second radically polymerizable compound (A-2) and the second radically polymerizable unsaturated monomer (B-2).
[3] The recess filling material kit according to [1] or [2], wherein the first radically polymerizable compound (A-1) and the second radically polymerizable compound (A-2) each independently contain a vinyl ester resin.
[4] The recess filling material kit according to any one of [1] to [3], wherein the expansive additive (J) includes at least one selected from the group consisting of quicklime and calcium sulfoaluminate.
[5] The recess filling material kit according to any one of [1] to [4], wherein the first radical polymerization initiator (D-1) and the second radical polymerization initiator (D-2) are each independently hydroperoxides.
[6] The recess filling material kit according to any one of [1] to [5], wherein the first radically polymerizable resin composition further contains a first metal-containing compound (E-1) and a first thiol compound (F-1), and
the second radically polymerizable resin composition further contains a second metal-containing compound (E-2) and a second thiol compound (F-2).
[7] The recess filling material kit according to any one of [1] to [6], wherein the expansive additive (J) is 0.3 to 30 parts by mass with respect to a total of 100 parts by mass of the second radically polymerizable compound (A-2) and the second radically polymerizable unsaturated monomer (B-2).
[8] The recess filling material kit according to any one of [1] to [7], wherein an amount of the first radical polymerization initiator (D-1) is 0.1 to 10 parts by mass with respect to a total of 100 parts by mass of the first radically polymerizable compound (A-1) and the first radically polymerizable unsaturated monomer (B-1), and
an amount of the second radical polymerization initiator (D-2) is 0.1 to 10 parts by mass with respect to a total of 100 parts by mass of the second radically polymerizable compound (A-2) and the second radically polymerizable unsaturated monomer (B-2).
[9] The recess filling material kit according to any one of [1] to [8], wherein an amount of the acidic compound (C) is 1 to 20 parts by mass with respect to a total of 100 parts by mass of the first radically polymerizable compound (A-1) and the first radically polymerizable unsaturated monomer (B-1) in the first radically polymerizable resin composition.
[10] The recess filling material kit according to any one of [1] to [9], wherein the acidic compound (C) is an unsaturated monobasic acid.
[11] The recess filling material kit according to any one of [1] to [10], wherein the first radical polymerization initiator (D-1) is a photoradical polymerization initiator having photosensitivity from an ultraviolet to a visible light region.
[12] A cured product of a recess filling material kit according to any one of [1] to [11], which is obtained by forming a first cured product of the first radically polymerizable resin composition on a surface of the recess, and forming a second cured product of the second radically polymerizable resin composition on a surface of the first cured product.
[13] A recess filling method for filling a recess using a recess filling material kit according to any one of [1] to [11], the method comprising:

an underlayer forming step of coating a surface of the recess with the first radically polymerizable resin composition to form an underlayer; and
a filling step of filling the second radically polymerizable resin composition on a surface of the underlayer formed on the surface of the recess.

[14] The recess filling method according to [13], wherein the recess is a bolt box.

[Effect of Invention]

According to the present invention, the structure itself can be protected from falling out due to initial bonding to the concrete base, steel jigs (bolts) and reinforcing steel structures, or due to shrinkage during curing of organic resin materials; from corrosion and wear caused by fluid flowing inside the box during pipeline operation; from vibration of cars and railways; and from wind pressure, or the like, thus enabling long-term operation of the pipeline itself.

By adding an acidic compound, the first radically polymerizable resin composition can achieve initial bonding not only to a concrete substrate but also to a steel jig or a reinforcing steel structure. According to one embodiment of the present invention, the first radically polymerizable resin composition can achieve initial bonding not only to the concrete underlayer but also to a steel jig, a reinforcing steel structure, and the like, because of the complex effect of metal soap and thiol having a specific structure, and the addition of an acidic compound. As a second radically polymerizable resin composition, by adding an appropriate amount of an expansive additive to the radically polymerizable resin composition that causes curing shrinkage due to a decrease in the free volume of the liquid component during curing, without being limited to the molding method, use temperature, application, and the like, when the resin composition is cured, the whole expands at a constant rate and then stabilizes; and as a result, a recess filling material kit having a radically polymerizable resin composition with a small shrinkage rate can be provided, and the cured product can be provided.

In addition, a recess filling method combining these can be provided.

BRIEF DESCRIPTION OF DRAWINGS

Fig. 1 is a diagram showing a method of preparing a specimen, (a) before placing, (b) during placing, or (c) during curing.

DETAILED DESCRIPTION OF THE EMBODIMENTS

The invention is described in detail below.

[Recess Filling Material Kit]

A recess filling material kit of the present embodiment basically includes a first radically polymerizable resin composition and a second radically polymerizable resin composition. However, other members, compositions, or the like may be included. The first radically polymerizable resin composition contains a first radically polymerizable compound (A-1), a first radically polymerizable unsaturated monomer (B-1), an acidic compound (C), and a first radical polymerization initiator (D-1). The second radically polymerizable resin composition contains a second radically polymerizable compound (A-2), a second radically polymerizable unsaturated monomer (B-2), a second radical polymerization initiator (D-2), an expansive additive (J), and an aggregate (K). It is preferable that the second radically polymerizable resin composition does not contain free water. In a recess to be filled, the first radically polymerizable resin composition and the second radically polymerizable resin composition are arranged independently of each other.

The meaning of containing the first and second radically polymerizable resin compositions in the recess filling material kit of the present embodiment is that both radically polymerizable compositions are each arranged independently with respect to a filling (repairing) part of the recess. It is not meant to mix both radically polymerizable compositions and use them as one recess filler mixture. Also, the meaning of "each arranged independently" means that the radically polymerizable compositions are not mixed with each other before use. Examples include a storage state in each container or another storage state in one container with a structure in which both compositions do not mix.

(First Radically Polymerizable Resin Composition)

The first radically polymerizable resin composition of the present embodiment contains a first radically polymerizable compound (A-1), a first radically polymerizable unsaturated monomer (B-1), an acidic compound (C), and a first radical polymerization initiator (D-1). The first radically polymerizable resin composition of the present embodiment may contain a first metal-containing compound (E-1), a first thiol compound (F-1), a first polymerization inhibitor (H-1), a first curing retarder (1-1), and the like, as required.

<First Radically Polymerizable Compound (A-1) >

The first radically polymerizable compound (A-1) in the present embodiment refers to a resin or multimeric compound that does not contain a first radically polymerizable unsaturated monomer (B-1) and an acidic compound (C) described later, and that has one or more ethylenically unsaturated groups in the molecule, in which a polymerization reaction proceeds via radicals.

As for the first radically polymerizable compound (A-1) of the present embodiment, the radically polymerizable compound described in the second radically polymerizable compound (A-2) of the present embodiment described later or a preferred example thereof can be used. The first radically polymerizable compound (A-1) preferably uses the same kind of radically polymerizable compound as the second radically polymerizable compound (A-2), and the first radically polymerizable compound (A-1) more preferably uses the same radically polymerizable compound as the second radically polymerizable compound (A-2).

As the first radically polymerizable compound (A-1), a radically polymerizable compound different from the second radically polymerizable compound (A-2) may be used.

For example, as the first radically polymerizable compound (A-1), it is preferable to use one or more selected from vinyl ester resin (epoxy (meth)acrylate resin), unsaturated polyester resin and urethane (meth)acrylate resin, and it is more preferable to use vinyl ester resin.

<First Radically Polymerizable Unsaturated Monomer (B-1)>

The first radically polymerizable unsaturated monomer (B-1) of the present embodiment is not particularly limited as long as it does not contain an acidic compound (C) described later and is a monomer having a radically polymerizable unsaturated group. Preferably, it is a monomer having a vinyl, allyl or (meth)acryloyl group.

As for the first radically polymerizable unsaturated monomer (B-1) of the present embodiment, the radically polymerizable unsaturated monomer described in the second radically polymerizable unsaturated monomer (B-2) of the present embodiment described later or a preferred example thereof can be used. The first radically polymerizable unsaturated monomer (B-1) preferably uses the same kind of radically polymerizable unsaturated monomer as the second radically polymerizable unsaturated monomer (B-2), and the first radically polymerizable unsaturated monomer (B-1) more preferably uses the same radically polymerizable unsaturated monomer as the second radically polymerizable unsaturated monomer (B-2).

The first radically polymerizable unsaturated monomer (B-1) may use a different radically polymerizable unsaturated monomer from the second radically polymerizable unsaturated monomer (B-2).

For example, styrene is preferred as the first radically polymerizable unsaturated monomer (B-1) from the viewpoint of versatility, and from the viewpoint of odor reduction and environmental impact reduction, monomers with (meth)acryloyl groups are preferred, cyclic hydrocarbon group-containing (meth)acrylates are more preferred, dicyclopentanyl (meth)acrylates are even more preferred, and dicyclopentanyl methacrylates are most preferred. By using a first radically polymerizable unsaturated monomer (B-1), the viscosity of the first radically polymerizable resin composition can be reduced to improve workability. In addition, the hardness, strength, chemical resistance and water resistance of the cured product can be improved. From the viewpoint of that, the amount of the first radically polymerizable unsaturated monomer (B-1) is preferably 10 to 250 parts by mass, more preferably 50 to 200 parts by mass, and even more preferably 80 to 150 parts by mass with respect to 100 parts by mass of the first radically polymerizable compound (A-1). When the amount of the first radically polymerizable unsaturated monomer (B-1) is 10 parts by mass or more, the viscosity of the first radically polymerizable resin composition is sufficiently reduced, and the penetration into the recessed portion is also improved. When the amount of the first radically polymerizable unsaturated monomer (B-1) is 250 parts by mass or less, sufficient coating film strength is obtained, and chemical resistance, water resistance, and the like are improved.

<Acidic Compound (C)>

The acidic compound (C) used in the present embodiment is not particularly limited as long as the compound exhibits acidity. The acidic compound (C) is preferably an organic acid having a carboxy group, more preferably a compound having an ethylenically unsaturated bond and a carboxy group, and even more preferably an unsaturated monobasic acid from the viewpoint of the curability of the first radically polymerizable resin composition. Specific examples include unsaturated monobasic acids such as (meth)acrylic acid, crotic acid, cinnamic acid and sorbic acid; saturated monobasic acids such as acetic acid and propionic acid; and reactants of dicyclopentadiene with polycarboxylic acid compounds (for example, succinic anhydride, maleic anhydride, phthalic anhydride, tetrahydrophthalic anhydride, hexahydrophthalic anhydride, and the like.). In terms of the curability of the first radically polymerizable resin composition, unsaturated monobasic acid is preferred and (meth)acrylic acid is more preferred.

The amount of the acidic compound (C) used is preferably 0.5 to 25 parts by mass, more preferably 1 to 20 parts by mass, and even more preferably 5 to 15 parts by mass, with respect to a total of 100 parts by mass of the first radically polymerizable compound (A-1) and the first radically polymerizable unsaturated monomer (B-1). When the amount of acidic compound (C) used is 0.5 parts by mass or more, sufficient bonding to an adherend is obtained. Less than 25 parts by mass provides sufficient effect strength and does not adversely affect bonding to adherends.

<First Radical Polymerization Initiator (D-1)>

As the first radical polymerization initiator (D-1) of the present embodiment, the radical polymerization initiator described in the second radical polymerization initiator (D-2) of the present embodiment described later or a preferred example thereof can be used. The first radical polymerization initiator (D-1) preferably uses the same kind of radical polymerization initiator as the second radical polymerization initiator (D-2), and the first radical polymerization initiator (D-1) more preferably uses the same radical polymerization initiator as the second radical polymerization initiator (D-2).

As the first radical polymerization initiator (D-1), a radical polymerization initiator different from the second radical polymerization initiator (D-2) may be used.

The amount of the first radical polymerization initiator (D-1) is preferably 0.1 to 10 parts by mass, more preferably 0.5 to 5 parts by mass, and even more preferably 1 to 3 parts by mass, with respect to a total of 100 parts by mass of the said first radically polymerizable compound (A-1) and first radically polymerizable unsaturated monomer (B-1). When the amount of the first radical polymerization initiator (D-1) is 0.1 parts by mass or more, there is no tack on a surface of the cured product and sufficient curability can be expected. When the amount of the first radical polymerization initiator (D-1) is 10 parts by mass or less, it does not adversely affect the physical properties of the cured product.

<First Metal-Containing Compound (E-1)>

The first radically polymerizable resin composition of the present embodiment may contain a first metal-containing compound (E-1) as a curing accelerator, if necessary. As the first metal-containing compound (E-1), the metal-containing compound described in the second metal-containing compound (E-2) of the present embodiment described later or a preferred example thereof can be used. It is preferable that the first metal-containing compound (E-1) uses the same kind of metal-containing compound as the second metal-containing compound (E-2), and it is more preferable that the first metal-containing compound (E-1) uses the same radical polymerization initiator as the second metal-containing compound (E-2).

As the first metal-containing compound (E-1), a metal-containing compound different from the second metal-containing compound (E-2) may be used.

The amount of the first metal-containing compound (E-1) is preferably 0.0001 to 5 parts by mass, more preferably 0.001 to 3 parts by mass, and even more preferably 0.005 to 1 parts by mass, with respect to a total of 100 parts by mass of the first radically polymerizable compound (A-1) and the first radically polymerizable unsaturated monomer (B-1). When the amount of the first metal-containing compound (E-1) is 0.0001 parts by mass or more, the curing proceeds rapidly. When the amount of the first metal-containing compound (E-1) is 5 parts by mass or less, the physical properties of the cured product are not adversely affected.

<First Thiol Compound (F-1) >

The first radically polymerizable resin composition of the present embodiment may contain a first thiol compound (F-1) as a curing accelerator if desired. When used in combination with the first metal-containing compound (E-1), the first thiol compound (F-1) coordinates to the vicinity of the metal of the first metal-containing compound (E-1), which is expected to have a function of preventing deactivation of the metal by water. As the first thiol compound (F-1), the thiol compounds described in the second thiol compound (F-2) of the present embodiment described later or their preferred examples can be used. It is preferable that the first thiol compound (F-1) uses the same kind of thiol compound as the second thiol compound (F-2), and it is more preferable that the first thiol compound (F-1) uses the same thiol compound as the second thiol compound (F-2).

The first thiol compound (F-1) may be a different thiol compound from the second thiol compound (F-2).

The amount of the first thiol compound (F-1) is preferably 0.01 to 10 parts by mass, more preferably 0.1 to 7 parts by mass, and even more preferably 0.1 to 5 parts by mass, with respect to a total of 100 parts by mass of the first radically polymerizable compound (A-1) and the first radically polymerizable unsaturated monomer (B-1). When the amount of the first thiol compound (F-1) is 0.01 parts by mass or more, the curing proceeds rapidly. When the amount of the first thiol compound (F-1) is 10 parts by mass or less, it does not adversely affect the physical properties of the cured product.

<First Curing Accelerator (G-1)>

The first radically polymerizable resin composition of the present embodiment may contain a first curing accelerator (G-1) other than a first metal-containing compound (E-1) and a first thiol compound (F-1) for the purpose of improving curability. As the first curing accelerator (G-1) of the present embodiment, the curing accelerators described in the second curing accelerator (G-2) of the present embodiment described later or their preferred examples can be used. The first curing accelerator (G-1) is preferably of the same type as the second curing accelerator (G-2), and the first curing accelerator (G-1) is more preferably the same as the second curing accelerator (G-2).

The first curing accelerator (G-1) may use a curing accelerator different from the second curing accelerator (G-2).

When the first radically polymerizable resin composition of the present embodiment contains the first curing accelerator (G-1), the amount is preferably 0.01 to 10 parts by mass, more preferably 0.05 to 5 parts by mass, and even more preferably 0.1 to 3 parts by mass, with respect to a total of 100 parts by mass of the first radically polymerizable compound (A-1) and the first radically polymerizable unsaturated monomer (B-1).

<First Polymerization Inhibitor (H-1)>

The first radically polymerizable resin composition of the present embodiment may contain a polymerization inhibitor from the viewpoint of suppressing excessive polymerization of the first radically polymerizable compound (A-1) and from the viewpoint of controlling the reaction rate. As the first polymerization inhibitor (H-1) of the present embodiment, the polymerization inhibitor described in the second polymerization inhibitor (H-2) of the present embodiment described later or a preferred example thereof can be used. The first polymerization inhibitor (H-1) is preferably the same kind of polymerization inhibitor as the second polymerization inhibitor (H-2), and the first polymerization inhibitor (H-1) is more preferably the same polymerization inhibitor as the second polymerization inhibitor (H-2).

As the first polymerization inhibitor (H-1), a different polymerization inhibitor from the second polymerization inhibitor (H-2) may be used.

When the first radically polymerizable resin composition contains a first polymerization inhibitor (H-1), the amount is preferably 0.0001 to 10 parts by mass with respect to a total of 100 parts by mass of the first radically polymerizable compound (A-1) and the first radically polymerizable unsaturated monomer (B-1); more preferably 0.001 to 3 parts by mass each; and even more preferably 0.01 to 1 parts by mass each, with respect to each 100 parts by mass of the first radically polymerizable compound (A-1) and the first radically polymerizable unsaturated monomer (B-1).

<First Curing Retarder (I-1)>

The first radically polymerizable resin composition of the present embodiment may contain a curing retarder for the purpose of delaying the curing of the first radically polymerizable compound (A-1). As the first curing retarder (1-1) of the present embodiment, the curing retarder described in the second curing retarder (I-2) of the present embodiment described later or a preferred example thereof can be used. The first curing retarder (1-1) is preferably of the same type as the second curing retarder (1-2), and the first curing retarder (I-1) is more preferably the same curing retarder as the second curing retarder (1-2).

The first curing retarder (I-1) may use a curing retarder different from the second curing retarder (1-2).

When the first radically polymerizable resin composition contains the first curing retarder (I-1), the amount is preferably 0.0001 to 10 parts by mass with respect to a total of 100 parts by mass of the first radically polymerizable compound (A-1) and the first radically polymerizable unsaturated monomer (B-1); more preferably 0.001 to 5 parts by mass, and even more preferably 0.05 to 3 parts by mass, with respect to each 100 parts by mass of the first radically polymerizable compound (A-1) and the first radically polymerizable unsaturated monomer (B-1).

< Other Components >

The first radically polymerizable resin composition of the present embodiment may contain components other than the above components as long as it does not cause any particular hindrance to strength development or acid resistance of a cured body. The components that can be contained include, for example, hydraulic inorganic substances such as calcium sulfate and pozzolanic substances, as well as admixtures that can impart properties such as condensation regulation, curing acceleration, curing delay, thickening, water retention, defoaming, water repellency, and waterproofing; fibers made of metals, polymers, carbon, and other materials; and admixtures such as pigments, extenders, foams, and clay minerals such as zeolites. Also, components that can be contained include coupling agents, plasticizers, anion-immobilized components, solvents, polyisocyanate compounds, surfactants, wet dispersants, waxes, thixotropic agents, and the like.

As the above other components that can be used in the first radically polymerizable resin composition of the

present embodiment, those described as the other components that can be used in the second radically polymerizable resin composition of the present embodiment described later and their preferred examples can be used. When the same other components are used in both the first and second radically polymerizable resin compositions, it is preferable to use the same kind of compound, and more preferably the same compound.

Different compounds may be used when similar other components are used in both the first radically polymerizable resin composition and the second radically polymerizable resin composition.

As the above other components which can be used for the first radically polymerizable resin composition of the present embodiment, in addition to the compounds exemplified in the item of the second radically polymerizable resin composition, the compounds exemplified below can also be used. In addition, the components whose purpose of addition is different from that of the second radically polymerizable resin composition are also supplemented below.

(Coupling Agent)

As the coupling agent, coupling agents that may be included in the second radically polymerizable resin composition described later can be used. The amount of the coupling agent is preferably 0.1 to 20 parts by mass, with respect to a total of 100 parts by mass of the first radically polymerizable compound (A-1) and the first radically polymerizable unsaturated monomer (B-1).

(Anion Immobilizing Components)

As the anion-immobilized component, an anion-immobilized component that may be included in the second radically polymerizable resin composition described later can be used. In particular, when reinforcing steels and the like are exposed in a recess filling area, the influence of this metal corrosion, especially metal corrosion due to salinity, can be reduced.

(First Thixotropic Agent)

The first radically polymerizable resin composition of the present embodiment may further contain a first thixotropic agent. As the first thixotropic agent used in the present embodiment, a known one can be used. The first thixotropic agent used in the present embodiment can be a second thixotropic agent that may be included in the second radically polymerizable resin composition described later. For example, as the first thixotropic agent in the present embodiment, silica powder (aerosil type), mica powder, calcium carbonate powder and short fiber asbestos are used as an inorganic type, and hydrogenated castor oil is used as an organic type. Preferably, a silica powder-based thixotropic agent is used. The first thixotropic agent may also be used in combination with a thixotropic auxiliary. The amount of the first thixotropic agent used in the present embodiment is preferably 0.1 to 20 parts by mass, and more preferably 0.5 to 15 parts by mass, with respect to a total of 100 parts by mass of the first radically polymerizable compound (A-1) and the first radically polymerizable unsaturated monomer (B-1). When the amount of the first thixotropic agent is 0.1 or more, sufficient thixotropy is obtained, and when the amount is 20 parts by mass or less, sufficient curability is obtained as the first radically polymerizable resin composition, and the bonding to the adherend is improved.

< Method for Producing First Radically Polymerizable Resin Composition >

The method for producing the first radically polymerizable resin composition of the present embodiment is not particularly limited, and methods known in the art can be used. For example, the first radically polymerizable resin composition can be produced by mixing the first radically polymerizable compound (A-1) and the first radically polymerizable unsaturated monomer (B-1) with the first metal-containing compound (E-1) as needed, then mixing the acidic compound (C) and further mixing the first radical polymerization initiator (D-1) with them.

One embodiment of the method for producing the first radically polymerizable resin composition of the present embodiment includes a step (1-S 1) of mixing the first radically polymerizable compound (A-1) and the first radically polymerizable unsaturated monomer (B-1) with the first metal-containing compound (E-1) as needed to obtain a mixture (1-i), a step (1-S2) of mixing the acidic compound (C) with the mixture (1-i) to obtain a mixture (1-ii), and a step (1-S3) of obtaining the first radically polymerizable resin composition (curable primer) in which the mixture (1-ii) is mixed with the first radical polymerization initiator (D-1).

In the step (1-S1) of obtaining the mixture (i) (sometimes simply referred to as "Step (1-S1)"), in addition to mixing the first metal-containing compound (E-1) with the first radically polymerizable compound (A-1) and the first radically polymerizable unsaturated monomer (B-1), the first thiol compound (F-1), the first polymerization inhibitor (H-1), the first curing retarder (1-1), the first thixotropic agent, an anion-immobilized component, or the like may be further mixed as needed.

After the step (1-S3) to obtain the first radically polymerizable resin composition (sometimes simply referred to as "Step (1-S3)"), the obtained first radically polymerizable resin composition may be further mixed with the fibers or the like as needed.

(Second Radically Polymerizable Resin Composition)

The second radically polymerizable resin composition of the present embodiment contains a second radically polymerizable compound (A-2), a second radically polymerizable unsaturated monomer (B-2), a second radical polymerization initiator (D-2), an expansive additive (J), and an aggregate (K). It is preferable that the second radically polymerizable resin composition does not contain free water. The second radically polymerizable resin composition of the present embodiment may contain a second metal-containing compound (E-2), a second thiol compound (F-2), a second polymerization inhibitor (H-2), a second curing retarder (1-2), a fiber (L), and the like, as required.

<Second Radically Polymerizable Compound (A-2) >

The second radically polymerizable resin composition of the present embodiment uses a second radically polymerizable compound (A-2). In the present embodiment, the second radically polymerizable compound (A-2) does not contain the second radically polymerizable unsaturated monomer (B-2) described later, but refers to a resin or multimeric compound having one or more ethylenically unsaturated groups in the molecule and in which the polymerization reaction proceeds via radicals.

Examples of the second radically polymerizable compound (A-2) include vinyl ester resins (epoxy (meth)acrylate resins), unsaturated polyester resins, polyester (meth)acrylate resins, urethane (meth)acrylate resins, (meth)acrylate resins and the like. Among these, one or more resins selected from vinyl ester resins and unsaturated polyester resins are preferred, and vinyl ester resins are more preferred. In this specification, "(meth)acrylate" means "acrylate or methacrylate."

(Vinyl Ester Resin)

The vinyl ester resin can be obtained by reacting an unsaturated monobasic acid with an epoxy resin.

Examples of the epoxy resins include bisphenol-type epoxy resins, biphenyl-type epoxy resins, novolac-type epoxy resins, trisphenol-methane-type epoxy resins, aralkyldiphenol-type epoxy resins, naphthalene-type epoxy resins, aliphatic epoxy resins, and the like. These may be used alone or in combination. From the viewpoint of reducing the viscosity of the vinyl ester resin after synthesis, it is preferable to use only aliphatic epoxy resin or a combination of bisphenol-type epoxy resin and aliphatic epoxy resins.

Examples of bisphenol-type epoxy resins include those obtained by reacting bisphenols and epichlorohydrin and/or methyl epichlorohydrin; those obtained by reacting glycidyl ether of bisphenol A, condensates of the said bisphenols, and epichlorohydrin and/or methyl epichlorohydrin; and the like. Examples of bisphenols include bisphenol A, bisphenol F, bisphenol S and tetrabromobisphenol A.

Examples of biphenyl-type epoxy resins include those obtained by reacting biphenol with epichlorohydrin and/or methyl epichlorohydrin.

Examples of the novolac epoxy resin include those obtained by reacting phenol novolac or cresol novolac with epichlorohydrin and/or methyl epichlorohydrin.

Examples of trisphenolmethane-type epoxy resins include those obtained by reacting trisphenolmethane or triscresol methane with epichlorohydrin and/or methyl epichlorohydrin.

Examples of aralkyldiphenol-type epoxy resins include those obtained by reacting aralkylphenol with epichlorohydrin and/or methyl epichlorohydrin.

Examples of naphthalene-type epoxy resins include those obtained by reacting dihydroxynaphthalene with epichlorohydrin and/or methyl epichlorohydrin.

Examples of aliphatic epoxy resins include alicyclic epoxy resins, alicyclic diol diglycidyl ether type epoxy resins, aliphatic diol diglycidyl ether type epoxy resins, poly (oxyalkylene) glycol diglycidyl ether type epoxy resins, and the like.

Examples of the alicyclic epoxy resin include alicyclic diepoxy acetal, alicyclic diepoxy adipate, alicyclic diepoxy carboxylate and the like.

Specific examples of alicyclic diol diglycidyl ethers include diglycidyl ethers of alicyclic diols having 3 to 20 carbon atoms (preferably a carbon number of 6 to 12, more preferably a carbon number of 7 to 10) such as cyclohexane dimethanol diglycidyl ether, dicyclopentenyl dialcohol diglycidyl ether, diglycidyl ether of hydrogenated bisphenol A, and dihydroxyterpene diglycidyl ether. Of these, a commercial product of cyclohexane dimethanol diglycidyl ether is DENACOL EX-216 L manufactured by Nagase ChemteX Corporation.

Specific examples of aliphatic diol diglycidyl ethers include diglycidyl ethers of aliphatic diols having 2 to 20

carbon atoms (preferably a carbon number of 4 to 12, more preferably a carbon number of 4 to 8, even more preferably a carbon number of 4 to 6) such as 1,6-hexanediol diglycidyl ether, 1,4-butanediol diglycidyl ether, ethylene glycol diglycidyl ether and propylene glycol diglycidyl ether. Of these, 1,6-hexanediol diglycidyl ether is commercially available as DENACOL EX-212 L manufactured by Nagase ChemteX Corporation, SR-16 H and SR -16 HL manufactured by Sakamoto Yakuhin Kogyo Co., Ltd., and EPOGOSEY (registered trademark) HD manufactured by Yokkaichi Chemical Company Limited. Another commercially available 1,4 butanediol diglycidyl ether is DENACOL EX-214 L manufactured by Nagase ChemteX Corporation.

Specific examples of poly (oxyalkylene) glycol diglycidyl ethers include diethylene glycol diglycidyl ether, polyethylene glycol diglycidyl ether, tripropylene glycol diglycidyl ether, polypropylene glycol diglycidyl ether, poly (tetramethylene) glycol diglycidyl ether, and the like.

Preferred examples of aliphatic epoxy resins include 1,6-hexanediol diglycidyl ether, polyethylene glycol diglycidyl ether and poly (tetramethylene) glycol diglycidyl ether. Among these, those with a number-average molecular weight of 150 to 1000 are more preferable.

The epoxy resin may be a diglycidyl ester such as dimeric acid diglycidyl ester or hexahydrophthalic acid diglycidyl ester. Examples of the epoxy resins include an epoxy resin having an oxazolidone ring, which is obtained by reacting the epoxy resin with a diisocyanate. Specific examples of epoxy resins having oxazolidone rings include Araldite (registered trademark) AER 4152 made by Asahi Kasei Epoxy Co., Ltd.

As the unsaturated monobasic acids, known unsaturated monobasic acids, for example, (meth)acrylic acid, crotic acid, cinnamic acid, and the like can be used. Reactants of polybasic anhydride with compounds having one hydroxy group and one or more (meth)acryloyl groups may also be used. In this specification, "(meth)acrylic acid" means one or both of "acrylic acid and methacrylic acid" and "(meth)acryloyl group" means one or both of "acryloyl group and methacryloyl group".

The polybasic acid is used to increase the molecular weight of the epoxy resin, and a known one can be used. Examples include succinic acid, glutaric acid, adipic acid, sebacic acid, phthalic acid, fumaric acid, maleic acid, itaconic acid, tetrahydrophthalic acid, hexahydrophthalic acid, dimeric acid, ethylene glycol-2-mol maleic anhydride adduct, polyethylene glycol-2-mol maleic anhydride adduct, propylene glycol 2-mol maleic anhydride adduct, polypropylene glycol-2-mol maleic anhydride adduct, dodecane diacid, tridecane diacid, octadecane diacid, 1,16-(6-ethylhexadecane) dicarboxylic acid, 1, 12-(6-ethyldodecane) dicarboxylic acid, carboxyl-terminated butadiene-acrylonitrile copolymer (trade name Hycar CTBN), and the like.

(Unsaturated Polyester Resin)

The unsaturated polyester resin may be obtained by esterification of a polyhydric alcohol component with a dibasic acid component containing an unsaturated dibasic acid and, if necessary, a saturated dibasic acid.

Examples of the unsaturated dibasic acids include maleic acid, maleic anhydride, fumaric acid, itaconic acid, itaconic anhydride and the like, which may be used alone or in combination of two or more kinds.

Examples of the saturated dibasic acids include aliphatic dibasic acids such as adipic acid, zubelic acid, azelaic acid, sebacic acid and isosebacic acid; and aromatic dibasic acids such as phthalic acid, phthalic anhydride, halogenated phthalic anhydride, isophthalic acid, terephthalic acid, tetrachlorophthalic acid, tetrachloro phthalic anhydride, dimeric acid, 2,6-naphthalenedicarboxylic acid, 2,7-naphthalenedicarboxylic acid, 2,3-naphthalenedicarboxylic acid, 2,3-naphthalenedicarboxylic anhydride, 4,4'-biphenyldicarboxylic acid, and dialkyl esters thereof; halogenated saturated dibasic acids; and the like, which may be used alone or in combination of two or more.

Although there are no particular restrictions on the polyhydric alcohols described above, examples of the polyhydric alcohols include divalent alcohols such as ethylene glycol, propylene glycol, diethylene glycol, dipropylene glycol, 1,2-butanediol, 1,3-butanediol, 1,4-butanediol, 1,5-pentanediol, 1,6-hexanediol, neopentyl glycol, 2-methyl-1,3-propanediol, 2-methyl-1, 4-butanediol, 2,2-dimethyl-1,3-propanediol, 2,2,4-trimethyl-1, 3-pentanediol, 2-ethyl-2-butyl-1, 3-propanediol, 3-methyl-1,5-pentanediol, diethylene glycol, triethylene glycol, polyethylene glycol, dipropylene glycol, polypropylene glycol, 1,2-cyclohexane glycol, 1,3-cyclohexane glycol, 1,4-cyclohexane glycol, 1,4-cyclohexanedimethanol, paraxylene glycol, bicyclohexyl-4,4'-diol, 2,6-decalin glycol and 2,7-decalin glycol;

divalent alcohols such as adducts between divalent phenols represented by hydrogenated bisphenol A, cyclohexane dimethanol, bisphenol A, bisphenol F, bisphenol S, tetrabromobisphenol A, and the like, and alkylene oxides represented by propylene oxide or ethylene oxide, and the like; and

alcohols having more than three valents, such as 1,2,3,4-tetrahydroxybutane, glycerin, trimethylolpropane and pentaerythritol.

Unsaturated polyester modified with a dicyclopentadiene-based compound may be used to the extent that the effect of the present embodiment is not impaired. As modifying methods by dicyclopentadiene-based compounds, there

are known methods such as, for example, obtaining an addition product between dicyclopentadiene and a maleic acid (didecanol monomaleate) and then introducing a dicyclopentadiene skeleton using the product as a monobasic acid.

Oxidative polymerization (air-curing) groups such as allyl or benzyl groups can be introduced into the vinyl ester resin or the unsaturated polyester resin used in the present embodiment. There are no particular restrictions on the method of introduction, but examples include the addition of polymers containing oxidative polymeric groups, the condensation of compounds having hydroxyl and allyl ether groups, and the addition of a reaction product of an acid anhydride with a compound having hydroxyl and allyl ether groups to allyl glycidyl ether or 2,6-diglycidyl phenyl allyl ether.

Oxidative polymerization (air curing) in the present embodiment refers to crosslinking associated with the formation and decomposition of peroxide by oxidation of the methylene bond between the ether bond and the double bond, which is found in, for example, an allyl ether group.

[Polyester (Meth)acrylate Resin, Urethane (Meth)acrylate Resin, and (Meth)acrylate Resin]

As the polyester (meth)acrylate resin in the present embodiment, for example, a resin obtained by reacting (meth)acrylic acid with both terminal hydroxyl groups of a polyester obtained by reacting a polycarboxylic acid with a polyhydric alcohol, more specifically, polyethylene terephthalate or the like, can be used.

As the urethane (meth)acrylate resin, for example, a resin obtained by reacting (meth)acrylic acid with hydroxyl or isocyanate groups at both ends of a polyurethane obtained by reacting an isocyanate with a polyhydric alcohol can be used.

As the (meth)acrylate resin, for example, a resin obtained by reacting a (meth)acrylic ester having a hydroxyl group with the substituent of a poly (meth)acrylic resin having one or more substituents selected from hydroxyl, isocyanate, carboxy and epoxy groups; or a polymer of the monomer having the substituents and (meth)acrylate can be used.

In the second radically polymerizable compound (A-2), a catalyst or polymerization inhibitor used when the resin or the like was synthesized may remain. Examples of the catalyst include compounds containing tertiary nitrogen such as triethylamine, pyridine derivatives, imidazole derivatives; amine salts such as tetramethylammonium chloride and triethylamine; phosphorus compounds such as trimethylphosphine and triphenylphosphine; and the like.

Examples of the polymerization inhibitors include hydroquinone, methyl hydroquinone, phenothiazine and the like.

When the catalyst or polymerization inhibitor remains in the second radically polymerizable compound (A-2), the amount is preferably 0.001% to 2% by mass, respectively.

Second Radically Polymerizable Unsaturated Monomer (B-2)

The second radically polymerizable unsaturated monomer (B-2) is not particularly limited as long as it has a radically polymerizable unsaturated group, but preferably has a vinyl group, an allyl group or a (meth)acryloyl group. The second radically polymerizable unsaturated monomer (B-2) may also be an unsaturated monobasic acid.

Specific examples of monomers having vinyl groups include styrene, p-chlorostyrene, vinyltoluene, $\alpha$-methylstyrene, dichlorostyrene, divinylbenzene, tert-butylstyrene, vinyl acetate, diallyl phthalate, triallyl isocyanurate, and the like.

Specific examples of monomers having a (meth)acryloyl group include (meth)acrylates. Specifically, examples of the (meth)acrylates include methyl (meth)acrylate, ethyl (meth)acrylate, n-butyl (meth)acrylate, iso-butyl (meth)acrylate, tert-butyl (meth)acrylate, 2-ethylhexyl (meth)acrylate, lauryl (meth)acrylate, cyclohexyl (meth)acrylate, benzyl (meth)acrylate, stearyl (meth)acrylate, tridecyl (meth)acrylate, cyclohexyl (meth)acrylate, dicyclopentanyl (meth)acrylate, dicyclopentenyl (meth)acrylate, dicyclopentenyloxyethyl (meth)acrylate, phenoxyethyl methacrylate, 2-hydroxyethyl methacrylate, ethylene glycol monomethyl ether (meth)acrylate, ethylene glycol monoethyl ether (meth)acrylate, ethylene glycol monobutyl ether (meth)acrylate, ethylene glycol monohexyl ether (meth)acrylate, ethylene glycol mono-2-ethylhexyl ether (meth)acrylate, diethylene glycol monomethyl ether (meth)acrylate, diethylene glycol monoethyl ether (meth)acrylate, diethylene glycol monobutyl ether (meth)acrylate, diethylene glycol monohexyl ether (meth)acrylate, diethylene glycol mono-2-ethylhexyl ether (meth)acrylate, neopentyl glycol di(meth)acrylate, dimethacrylate of PTMG, 1,3-butylene glycol di(meth)acrylate, 1,6-hexanediol di(meth)acrylate, neopentyl glycol di(meth)acrylate, 2-hydroxy -1, 3-dimethacryloxypropane, 2,2-bis(4- (methacryloyl ethoxy) phenyl) propane, 2,2-bis(4-(methacryloxy diethoxy) phenyl) propane, 2,2-bis(4-(methacryloxy polyethoxy) phenyl) propane, tetraethylene glycol di(meth)acrylate, bisphenol AEO modified (n = 2) di(meth)acrylate, isocyanuric acid EO modified (n = 3) di(meth)acrylate, pentaerythritol di(meth)acrylate monostearate, dicyclopentenyl (meth)acrylate, dicyclopentenyloxyethyl (meth)acrylate, tricyclodecanyl (meth)acrylate, tris (2-hydroxyethyl) isocyanurate (meth)acrylate, and the like.

Furthermore, examples of the polyfunctional (meth)acrylates include, for example, alkanediol di(meth)acrylates such as ethylene glycol di(meth)acrylate, 1,2-propylene glycol di(meth)acrylate, 1,3-butylene glycol di(meth)acrylate, 1,4-butylene glycol di(meth)acrylate, neopentyl glycol di(meth)acrylate, and 1,6-hexanediol di(meth)acrylate; polyoxyalkylene glycol di(meth)acrylates such as diethylene glycol di(meth)acrylates, dipropylene glycol di(meth)acrylates, triethylene glycol (meth)acrylates, tetraethylene glycol di(meth)acrylates, and polyethylene glycol (meth)acrylates; trimethylolpropane di(meth)acrylate, glycerin di(meth)acrylate, pentaerythritol di(meth)acrylate, trimethylolpropane tri(meth)acrylate, glycerin tri(meth)acrylate, pentaerythritol tri(meth)acrylate, pentaerythritol tetra (meth)acrylate, dipentaerythritol hexa (meth)acrylate and the like.

Furthermore, the following compound can also be used as the second radically polymerizable unsaturated monomer (B-2). These include divinylbenzene, diallyl phthalate, triallyl phthalate, triallyl cyanurate, triallyl isocyanurate, allyl (meth)acrylate, diallyl fumarate, allyl methacrylate, vinylbenzyl butyl ether, vinylbenzyl hexyl ether, vinylbenzyl octyl ether, vinylbenzyl (2-ethylhexyl) ether, vinylbenzyl (β-methoxymethyl) ether, vinylbenzyl (n-butoxypropyl) ether, vinylbenzylcyclohexyl ether, vinylbenzyl (β-phenoxyethyl) ether, vinylbenzyldicyclopentenyl ether, vinylbenzyldicyclopentenyloxy ethyl ether, vinylbenzyldicyclopentenyl methyl ether, divinylbenzyl ether and (meth)acrylic acid.

These may be used alone or in combination of two or more.

Among these, styrene is preferable from the viewpoint of versatility, and from the viewpoint of odor reduction and environmental burden reduction, monomers with (meth)acryloyl groups are preferable, (meth)acrylates containing cyclic hydrocarbon groups are more preferable, and dicyclopentanyl (meth)acrylates and dicyclopentenyloxyethyl (meth)acrylates are even more preferable.

The second radically polymerizable unsaturated monomer (B-2) can be used to reduce the viscosity of the second radically polymerizable resin composition of the present embodiment and to improve hardness, strength, chemical resistance, water resistance, and the like. From the viewpoint of preventing degradation of cured products and environmental pollution, the amount of the second radically polymerizable unsaturated monomer (B-2) is preferably 90% by mass or less, more preferably 70% by mass or less, and even more preferably 60% by mass or less, with respect to the total amount of the second radically polymerizable compound (A-2) and the second radically polymerizable unsaturated monomer (B-2).

The total amount of the second radically polymerizable compound (A-2) and the second radically polymerizable unsaturated monomer (B-2) in the second radically polymerizable resin composition of the present embodiment is preferably 5% to 99.9% by mass, more preferably 10% to 80% by mass, even more preferably 15% to 60% by mass, and most preferably 18% to 40% by mass. When the total amount of the second radically polymerizable compound (A-2) and the second radically polymerizable unsaturated monomer (B-2) in the second radically polymerizable resin composition is within the above range, the hardness of the cured product is further improved.

< Second Radical Polymerization Initiator (D-2) >

The second radically polymerizable resin composition of the present embodiment contains a second radical polymerization initiator (D-2) as a curing agent. Examples of the second radical polymerization initiator (D-2) include a thermal radical polymerization initiator (D-21) and a photoradical polymerization initiator (D-22). Among these, a thermal radical polymerization initiator (D-21) is preferred.

Examples of thermal radical polymerization initiators (D-21) include organic peroxides such as diacyl peroxide-based initiators such as benzoyl peroxide; peroxy ester-based initiators such as tert-butyl peroxybenzoate; hydroperoxides-based initiators (RCOOH) such as cumene hydroperoxide (CHP), diisopropyl benzene hydroperoxide, tert-butyl hydroperoxide and paramentane hydroperoxide; dialkyl peroxide-based initiators such as dicumyl peroxide; ketone peroxide-based initiators such as methylethyl ketone peroxide, and acetyl acetone peroxide; peroxy ketalse-based initiators; alkyl peresterse-based initiators; and percarbonatese-based initiators. Among these, hydroperoxide-based radical polymerization initiators (RCOOH) (simply called hydroperoxide) are preferred, and cumene hydroperoxides (CHP) such as Parkmill (registered trademark) H-80 manufactured by NOF Corporation and diisopropylbenzene hydroperoxides such as Parkmill (registered trademark) P manufactured by NOF Corporation are more preferred.

Examples of photoradical polymerization initiators (D-22) include benzoin ethers-based initiators such as benzoin alkyl ethers; benzophenones-based initiators such as benzophenones, benzyl and methyl orthobenzoyl benzoates; acetophenones-based initiators such as benzyl dimethyl ketal, 2,2-diethoxyacetophenone, 2-hydroxy-2-methylpropiophenone, 4-isopropyl-2-hydroxy-2-methylpropiophenone and 1,1-dichloroacetophenone; and thioxanthones-based initiators such as 2-chlorothioxanthone, 2-methylthioxanthone and 2-isopropylthioxanthone.

Examples of the photoradical polymerization initiators (D-22) that are photosensitive from the ultraviolet to the visible light range include acetophenones, benzyl ketals, (bis)acylphosphine oxides, and other well-known initiators, namely, trade name Irgacure-1700 (Ciba Specialty Chemicals, Inc.), which is a 75%/25% mixture of 2-hydroxy-2-methyl-1-phenylpropane-1-one (product name: Darocur 1173, manufactured by Ciba Specialty Chemicals, Inc.) and bis(2, 6-dimethoxybenzoyl)-2, 4, 4-trimethylpentylphosphine oxide (Ciba Specialty Chemicals, Inc.); trade name Irgacure 1800 (manufactured by Ciba Specialty Chemicals Co., Ltd.), which is a 75%/25% mixture of 1-hydroxycyclohexyl phenyl ketone (product name: Irgacure 184, manufactured by Ciba Specialty Chemicals, Inc.) and bis(2, 6-dimethoxybenzoyl) -2, 4, 4-trimethylpentyl phosphine oxide (manufactured by Ciba Specialty Chemicals Co., Ltd.), and trade name Irgacure

1850 (manufactured by Ciba Specialty Chemicals Co., Ltd.), which is a 50%/50% mixture; bis(2,4,6-trimethylbenzoyl) phenylphosphine oxide (product name: Irgacure 819, manufactured by Ciba Specialty Chemicals, Inc.); 2,4,6-trimethylbenzoyldiphenylphosphine oxide (product name: Lucirin TPO, manufactured by BASF); trade name Darocur 4265, which is a 50%/50% mixture of 2-hydroxy -2-methyl-1-phenylpropane-1-one (product name: Darocur 1173, manufactured by Ciba Specialty Chemicals, Inc.) and 2,4, 6 trimethylbenzoyl diphenylphosphine oxide (product name: Lucirin TPO, manufactured by BASF), and the like.

Photoradical polymerization initiators (D-22) having photosensitivity in the visible light region include camphorquinone, benzyltrimethylbenzoyldiphenylphosphinoxide, methylthioxanthone, dicyclopentadiethyltitanium-di(pentafluorophenyl), and the like.

These second radical polymerization initiators (D-2) may be used alone or in a mixture of two or more. The other reaction may be incorporated for the purpose of assisting the main reaction of thermosetting and photocuring, and a thermal radical polymerization initiator (D-21) and a photoradical polymerization initiator (D-22) may be used in combination as needed.

It can also be used in composite forms such as organic peroxide/dye-based compound, diphenylide salt/dye-based compound, imidazole/keto compound, hexaallylbiimidazole compound/hydrogen-donating compound, mercaptobenzothiazole/tiopyrylium salt, metal arene/cyanine dye, hexaallylbiimidazole/radical generator, and the like, depending on the forming conditions.

When the second radically polymerizable resin composition of the present embodiment contains a second radical polymerization initiator (D-2), the amount is preferably 0.1 to 10 parts by mass, more preferably 0.2 to 8 parts by mass, even more preferably 0.3 to 6 parts by mass, and most preferably 0.5 to 5 parts by mass, with respect to a total of 100 parts by mass of the second radically polymerizable compound (A-2) and the second radically polymerizable unsaturated monomer (B-2).

<Second Metal-Containing Compounds (E-2) >

The second radically polymerizable resin composition of the present embodiment can use one or more second metal-containing compounds (E-2) selected from metal soaps (E-21) and metal complexes (E-22) having a β-diketone skeleton as curing accelerants. The metal soap (E-21) in the present embodiment refers to salts of organic acids other than long-chain fatty acids or long-chain fatty acids and metallic elements other than potassium and sodium. In addition, the metal complex (E-22) having a β-diketone skeleton in the present embodiment refers to a complex in which a compound having a structure with one carbon atom between two carbonyl groups is coordinated to a metal element.

The amount of the second metal-containing compound (E-2) in the second radically polymerizable resin composition in terms of metal components is preferably 0.0001 to 5 parts by mass, more preferably 0.001 to 4 parts by mass, and even more preferably 0.005 to 3 parts by mass, with respect to a total of 100 parts by mass of the aforementioned second radically polymerizable compound (A-2) and second radically polymerizable unsaturated monomer (B-2). When the amount of the second metal-containing compound (E-2) in terms of metal components is within the above range, the curing proceeds quickly.

(Metal Soap (E-21))

There is no particular restriction on long-chain fatty acids in metal soaps (E-21), for example, fatty acids with 6 to 30 carbon atoms are preferred. Specifically, linear or cyclic saturated fatty acids such as heptanoic acid, octanoic acid such as 2-ethylhexanoic acid, nonanoic acid, decanoic acid, neodecanoic acid, undecanoic acid, dodecanoic acid, tetradecanoic acid, hexadecanoic acid, octadecanoic acid, eicosanoic acid, docosanoic acid, tetracosanoic acid, hexacosanoic acid, octacosanoic acid, triacontanoic acid, naphthenic acid, and the like; and unsaturated fatty acids such as oleic acid, linoleic acid, linolenic acid, and the like, are preferred.

In addition, rosin acid, linseed oil fatty acid, soybean oil fatty acid, tall oil acid, and the like can also be used.

Although there are no particular restrictions on organic acids other than long-chain fatty acids in metal soaps (E-21), compounds of weak acids with carboxy, hydroxy and enol groups that are soluble in organic solvents are preferred.

Examples of compounds having a carboxy group include carboxylic acids such as formic acid, acetic acid and oxalic acid; hydroxy acids such as citric acid, bile acid sugar acid, 12-hydroxystearic acid, hydroxycinnamic acid, and folic acid; amino acids such as alanine and arginine; and aromatic acids such as benzoic acid and phthalic acid.

Examples of compounds having hydroxy or enol groups include ascorbic acid, α acid, imidic acid, erythorbic acid, cloconic acid, kojic acid, squaric acid, sulfinic acid, tycoic acid, dehydroacetic acid, delta acid, uric acid, hydroxamic acid, humic acid, fulvic acid and phosphonic acid.

Among these, long-chain fatty acids are preferred, chain or cyclic saturated fatty acids with 6 to 16 carbon atoms or unsaturated fatty acids with 6 to 16 carbon atoms are more preferred, octanoic acid, 2-ethylhexanoic acid and naphthenic acid are even more preferred, and 2-ethylhexanoic acid and naphthenic acid are most preferred.

Metal elements constituting metal soap (E-21) include metal elements of Groups 1 to 2 (wherein, potassium and sodium are excluded), such as lithium, magnesium, calcium and barium; metal elements of Groups 3 to 12 such as titanium, zirconium, vanadium, manganese, iron, ruthenium, cobalt, rhodium, nickel, palladium, platinum, copper, silver, gold and zinc; metal elements of Groups 13 to 14 such as aluminum, indium, tin and lead; rare earth metal elements such as neodymium and cerium; bismuth; and the like.

In the present embodiment, metallic elements of Groups 2 to 12 are preferred; zirconium, barium, vanadium, manganese, iron, cobalt, copper, titanium, bismuth, calcium, lead, tin and zinc are more preferred; zirconium, manganese, iron, cobalt, copper, titanium, bismuth, calcium, lead, tin and zinc are even more preferred; and zirconium, manganese, cobalt, bismuth and calcium are most preferred.

Specific metal soaps (E-21) are preferred to be zirconium octylate, manganese octylate, cobalt octylate, bismuth octylate, calcium octylate, zinc octylate, vanadium octylate, lead octylate, tin octylate, cobalt naphthenate, copper naphthenate, barium naphthenate, bismuth naphthenate, calcium naphthenate, lead naphthenate and tin naphthenate; among which zirconium octylate, manganese octylate, cobalt octylate, bismuth octylate, calcium octylate, lead octylate, tin octylate, bismuth naphthenate, calcium naphthenate, lead octylate, tin octylate, bismuth naphthenate, calcium naphthenate, lead naphthenate and tin naphthenate are more preferable. Among these, manganese octylate and cobalt octylate are even more preferred. A specific example of cobalt octylate is hexoate cobalt (cobalt amount in total product: 8 % by mass, molecular weight: 345.34) manufactured by Toei Chemical Industry. Specific examples of manganese octylate include hexoate manganese (manganese amount in total product: 8 % by mass, molecular weight: 341.35) manufactured by Toei Chemical Industry.

(Metal Complex with β-Diketone Skeleton (E-22))

A metal complex (E-22) has a β-diketone skeleton (hereinafter also referred to as metal complex (E-22)). Examples of metal complexes (E-22) include those formed by complexation of metal with acetylacetone, ethyl acetoacetate, benzoylacetone, and the like, and these metal complexes (E-22) also exhibit the same function as the metal soap (E-21).

Metal elements constituting the metal complex (E-22) include metal elements similar to the metal soap (E-21).

As specific metal complexes (E-22), zirconium acetylacetonate, vanadium acetylacetonate, cobalt acetylacetonate, titanium acetylacetonate, titanium dibutoxybis(acetylacetonate), iron acetylacetonate, and acetoacetate ethyl ester cobalt are preferred; among which zirconium acetylacetonate, titanium acetylacetonate, and titanium dibutoxybis(acetylacetonate) are more preferred.

<Second Thiol Compound (F-2) >

The second radically polymerizable resin composition of the present embodiment may contain one or more second thiol compounds (F-2) selected from a secondary thiol compound (F-21) and a tertiary thiol compound (F-22). It is conjectured that the second thiol compound (F-2) has a function as a curing accelerator as well as a function of coordinating near the metal of the second metal-containing compound (E-2) to prevent deactivation of the metal by water.

The second thiol compound (F-2) used in the present embodiment is not particularly limited as long as the compound has one or more mercapto groups that bind to secondary or tertiary carbon atoms in the molecule (hereafter, they are sometimes referred to as "secondary mercapto groups" and "tertiary mercapto groups", respectively), but multifunctional thiols, which are compounds that have two or more secondary or tertiary mercapto groups in the molecule, are preferred, especially bifunctional thiols, which are compounds that have two secondary or tertiary mercapto groups in the molecule. A secondary thiol compound (F-21) is also preferable to a tertiary thiol compound (F-22).

Here, "multifunctional thiol" means a thiol compound having two or more functional mercapto groups, and "bifunctional thiol" means a thiol compound having two functional mercapto groups.

Although there are no particular restrictions on compounds having two or more secondary or tertiary mercapto groups in the molecule, compounds having at least one structure represented by formula (Q), and having two or more secondary or tertiary mercapto groups in the molecule, which include the mercapto group in the structure represented by formula (Q), are preferred.

[Chemical Formula 1]

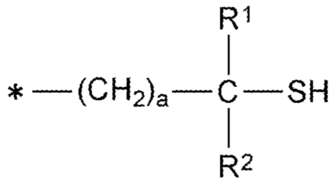

· · · (Q)

(In the formula (Q), $R^1$ is a hydrogen atom, an alkyl group with 1 to 10 carbon atoms, or an aromatic group with 6 to 18 carbon atoms; $R^2$ is a 1 to 10 carbon alkyl group or a 6 to 18 carbon aromatic group; and * is linked to any organic group. In addition, a is an integer of 0 to 2.)

(Secondary Thiol Compound (F-21))

When the second thiol compound (F-2) having the structure represented by formula (Q) is a secondary thiol compound (F-21), specific examples of the secondary thiol compound (F-21) include 3-mercaptobutyric acid, di(1-mercaptoethyl) 3-mercaptophthalate, di(2-mercaptopropyl) phthalate, di(3-mercaptobutyl) phthalate, ethylene glycol bis(3-mercaptobutylate), propylene glycol bis(3-mercaptobutylate), diethylene glycol bis(3-mercaptobutylate), butanediol bis(3-mercaptobutylate), octanediol bis(3-mercaptobutylate), trimethylolethantris (3-mercaptobutylate), trimethylolpropane tris (3-mercaptobutylate), pentaerythritol tetrakis (3-mercaptobutylate), dipentaerythritol hexakis (3-mercaptobutylate), ethylene glycol bis(2-mercaptopropionate), propylene glycol bis(2-mercaptopropionate), diethylene glycol bis(2-mercaptopropionate), butanediol bis(2-mercaptopropionate), octanediol bis(2-mercaptopropionate), trimethylolpropantris (2-mercaptopropionate), pentaerythritol tetrakis (2-mercaptopropionate), dipentaerythritol hexakis (2-mercaptopropionate), ethylene glycol bis(4-mercaptovalerate), diethylene glycol bis(4-mercaptovalerate), butanediol bis(4-mercaptovalerate), octanediol bis(4-mercaptovalerate), trimethylolpropane tris (4-mercaptovalerate), pentaerythritol tetrakis (4-mercaptovalerate), dipentaerythritol hexakis (4-mercaptovalerate), ethylene glycol bis(3-mercaptovalerate), propylene glycol bis(3-mercaptovalerate), diethylene glycol bis(3-mercaptovalerate), butanediol bis(3-mercaptovalerate), octanediol bis(3-mercaptovalerate), trimethylolpropane tris (3-mercaptovalerate), pentaerythritol tetrakis (3-mercaptovalerate), dipentaerythritol hexakis (3-mercaptovalerate), hydrogenated bisphenol A bis(3-mercaptobutylate), bisphenol A dihydroxyethyl ether-3-mercaptobutylate, 4,4'-(9-fluorenylidene) bis(2-phenoxyethyl (3-mercaptobutylate)), ethylene glycol bis(3-mercapto-3-phenylpropionate), propylene glycol bis(3-mercapto-3-phenylpropionate), diethylene glycol bis(3-mercapto-3-phenylpropionate), butanediol bis(3-mercapto-3-phenylpropionate), octanediol bis(3-mercapto-3-phenylpropionate), trimethylolpropantris (3-mercapto-3-phenylpropionate), tris-2-(3-mercapto-3-phenylpropionate) ethylisocyanurate, pentaerythritol tetrakis (3-mercapto-3-phenylpropionate), dipentaerythritol hexakis (3-mercapto-3-phenylpropionate), and the like.

Among the secondary thiol compounds (F-21), examples of commercial products of compounds having two or more secondary mercapto groups in the molecule include 1,4-bis(3-mercaptobutyryloxy) butane (Karenz MT (registered trademark) BD1, manufactured by Showa Denko K.K.), pentaerythritol tetrakis (3-mercaptobutyrate) (Karenz MT (registered trademark) PE1, manufactured by Showa Denko K.K.), 1,3,5-tris [2- (3-mercaptobutyryl oxyethyl)]-1, 3,5-triazine-2, 4, 6 (1H, 3H, 5H) -trione (Karenz MT (registered trademark) NR1, manufactured by Showa Denko K.K.), trimethylolethantris (3-mercaptobutyrate) (manufactured by Showa Denko K.K., TEMB), trimethylolpropantris (3-mercaptobutyrate) (manufactured by Showa Denko K.K., TPMB); and it is preferable to use one or more of these compounds. Among these, 1,4-bis(3-mercaptobutyryloxy) butane (Karenz MT (registered trademark) BD1, manufactured by Showa Denko K.K.) is preferred.

Tertiary Thiol Compound (F-22)

When the second thiol compound (F-2) having the structure represented by formula (Q) is a tertiary thiol compound (F-22), specific examples include di(2-mercaptoisobutyl) phthalate, ethylene glycol bis(2-mercaptoisobutylate), propylene glycol bis(2-mercaptoisobutylate), diethylene glycol bis(2-mercaptoisobutylate), butanediol bis(2-mercaptoisobutylate), octanediol bis(2-mercaptoisobutylate), trimethylolethantris (2-mercaptoisobutylate), trimethylolpropane tris (2-mercaptoisobutylate), pentaerythritol tetrakis (2-mercaptoisobutylate), dipentaerythritol hexakis (2-mercapto isobutylate), di(3-mercapto-3-methylbutyl) phthalate, ethylene glycol bis(3-mercapto-3-methylbutylate), propylene glycol bis(3-mercapto-3-methylbutylate), diethylene glycol bis(3-mercapto-3-methylbutylate), butanediol bis(3-mercapto-3-methylbutylate), octanediol bis(3-mercapto-3-methylbutylate), trimethylolethantris (3-mercapto-3-methylbutylate), trimethylolpropantris (3-mercapto -3-methylbutylate), pentaerythritol tetrakis (3-mercapto -3-methylbutylate), and dipentaerythritol hexakis (3-mercapto -3-methylbutyrate).

The total amount of the second thiol compound (F-2) in the second radically polymerizable resin composition of the present embodiment is preferably 0.01 to 10 parts by mass, more preferably 0.1 to 7 parts by mass, even more preferably 0.1 to 5 parts by mass, and most preferably 0.2 to 4 parts by mass, with respect to a total of 100 parts by mass of the aforementioned second radically polymerizable compound (A-2) and second radically polymerizable unsaturated monomer (B-2). When the amount of the second thiol compound (F-2) is 0.01 parts by mass or more, the curing function is sufficiently obtained, and when the amount is 10 parts by mass or less, the curing proceeds quickly.

Also, regarding the total molar ratio of the second thiol compound (F-2) to the metal component of the second metal-containing compound (E-2), (F-2)/(E-2), 0.1 to 15 is preferable, 0.5 to 15 is more preferable, 1 to 12 is even more preferable, 1.5 to 10 is still more preferable, and 3 to 9 is most preferable. When the molar ratio [(F-2)/(E-2)] is 0.1 or more, the second thiol compound (F-2) can be sufficiently coordinated in the vicinity of the metal of the second metal-containing compound (E-2), and when the molar ratio is 15 or less, the balance between production cost and effect is improved.

One or more of the second thiol compounds (F-2) may be used alone or in combination. When a secondary thiol compound (F-21) and a tertiary thiol compound (F-22) are used in combination, the molar ratio of the secondary thiol compound (F-21) and the tertiary thiol compound (F-22), [(F-21)/(F-22)], is preferably 0.001 to 1000 and more preferably 1 to 10. When the molar ratio [(F-21)/(F-22)] is within the above range, the second metal-containing compound (E-2) and the second thiol compound (F-2) are stabilized in the second radically polymerizable resin composition, and no disulfide compound is generated by bonding the second thiol compounds (F-2) together as a byproduct. From the viewpoint of preserving the second radically polymerizable resin composition with the second metal-containing compound (E-2) and the second thiol compound (F-2) in a stable state, it is preferable to use the secondary thiol compound (F-21) or the tertiary thiol compound (F-22) alone.

< Second Curing Accelerator (G-2) >

The second radically polymerizable resin composition of the present embodiment may contain a second curing accelerator (G-2) other than a second metal-containing compound (E-2) and a second thiol compound (F-2) for the purpose of improving curability.

As the second curing accelerator (G-2), other than the second metal-containing compound (E-2) and the second thiol compound (F-2), amines can be uses; and specific examples of amines include aniline, N,N-substituted anilines, N,N-substituted-p-toluidine, and 4-(N,N-substituted amino) benzaldehyde, such as N,N-dimethylaniline, N,N-diethylaniline, p-toluidine, N,N-dimethyl-p-toluidine, N,N-bis(2-hydroxyethyl)-p-toluidine, 4-(N,N-dimethylamino) benzaldehyde, 4-[N,N-bis(2-hydroxyethyl) amino] benzaldehyde, 4-(N-methyl-N-hydroxyethylamino) benzaldehyde, N,N-bis(2-hydroxypropyl)-p-toluidine, N-ethyl-m-toluidine, triethanolamine, m-toluidine, diethylenetriamine, pyridine, phenylimolfolin, piperidine, N,N-bis(hydroxyethyl) aniline, diethanolaniline, and the like.

When the second radically polymerizable resin composition of the present embodiment contains a second curing accelerator (G-2), the amount is preferably 0.01 to 10 parts by mass, more preferably 0.05 to 5 parts by mass, and even more preferably 0.1 to 3 parts by mass, with respect to a total of 100 parts by mass of the second radically polymerizable compound (A-2) and the second radically polymerizable unsaturated monomer (B-2).

< Second Polymerization Inhibitor (H-2) >

The second radically polymerizable resin composition of the present embodiment may contain a second polymerization inhibitor (H-2) from the viewpoint of suppressing excessive polymerization of the second radically polymerizable compound (A-2) and from the viewpoint of controlling the reaction rate.

As the second polymerization inhibitor (H-2), there are known compounds such as hydroquinone, methyl hydroquinone, phenothiazine, catechol, and 4-tert-butyl catechol. When the second radically polymerizable resin composition contains a second polymerization inhibitor (H-2), the amount is preferably 0.0001 to 10 parts by mass with respect to a total of 100 parts by mass of the second radically polymerizable compound (A-2) and the second radically polymerizable unsaturated monomer (B-2); more preferably 0.001 to 3 parts by mass each, and even more preferably 0.01 to 1 parts by mass, with respect to each 100 parts by mass of the second radically polymerizable compound (A-2) and the second radically polymerizable unsaturated monomer (B-2).

< Second Curing Retarder (1-2) >

The second radically polymerizable resin composition of the present embodiment may contain a second curing retarder (I-2) for the purpose of delaying the curing of the second radically polymerizable compound (A-2). Examples of the second curing retarder (I-2) include free radical-type curing retarders, which include TEMPO derivatives such as

2,2,6,6-tetramethylpiperidine 1-oxyl free radical (TEMPO), 4-hydroxy-2,2,6,6-tetramethylpiperidine 1-oxyl free radical (4H-TEMPO), 4-oxo-2,2,6,6-tetramethylpiperidine 1-oxyl free radical (4-Oxo-TEMPO). Among these, 4-hydroxy-2,2,6,6-tetramethylpiperidine 1-oxyl free radical (4H-TEMPO) is preferred in terms of cost and ease of handling.

When the second radically polymerizable resin composition contains a second curing retarder (I-2), the amount is preferably 0.0001 to 10 parts by mass, more preferably 0.001 to 5 parts by mass each, and even more preferably 0.05 to 3 parts by mass, with respect to a total of 100 parts by mass of the second radically polymerizable compound (A-2) and the second radically polymerizable unsaturated monomer (B-2).

< Expansive Additive (J) >

The expansive additive (J) used in the present embodiment may be any expansive additive as long as the expansive additive satisfies the standard of JIS A 6202 "Expansive Additive for Concrete," which is generally used as an expansive additive for concrete. Specifically, the expansive additive (J) can be anything that produces calcium hydroxide or ettringite through hydration. For example, an expansive additive (J) containing at least one selected from the group consisting of quicklime and calcium sulfo aluminate is preferred. More preferable expansive additives include (1) an expansive additive containing quick lime as the active component (quicklime-based expansive additive), (2) an expansive additive containing calcium sulfoaluminate as the active component (ettringite-based expansive additive), and (3) a quicklime-ettringite composite expansive additive.

Specific examples of quicklime-based expansive additives include, for example, Taiheiyo HYPER EXPAN-K, Taiheiyo HYPER EXPAN-M, Taiheiyo EXPAN-K, Taiheiyo EXPAN-M and N-EX, manufactured by Taiheiyo Materials Corporation.

Specific examples of ettringite expansive additives include Denka CSA # 10 and Denka CSA # 20, manufactured by Denka.

Specific examples of quicklime-ettringite composite expansive additives include Denka Power CSA Type S, Denka Power CSA Type R and Denka Power CSA Type T, manufactured by Denka.

The amount of the expansive additive (J) in the present embodiment is preferably 0.3 to 30 parts by mass, more preferably 0.5 to 25 parts by mass, even more preferably 1 to 20 parts by mass, and most preferably 1 to 16 parts by mass, with respect to a total of 100 parts by mass of the second radically polymerizable compound (A-2) and the second radically polymerizable unsaturated monomer (B-2). If the amount of the expansive additive (J) is 30 parts by mass or less, the expansion rate does not exceed the elongation of the resin when the second radically polymerizable resin composition is cured. On the other hand, if the amount of the expansive additive (J) is 0.3 parts by mass or more, it does not mean that expansion performance for the second radically polymerizable compound (A-2) does not appear. These expansive additives (J) may be used alone or in a mixture of two or more.

< Cement >

Preferably, the second radically polymerizable resin composition of the present embodiment substantially contains no cement. "Substantially contains no cement" means not more than 3 % by mass, preferably not more than 2 % by mass, more preferably not more than 1 % by mass, and even more preferably not more than 0.5 % by mass, with respect to the second radically polymerizable resin composition.

Here, examples of the cements include Portland cement, other mixed cement, ultrafast hard cement, and the like. Examples of Portland cement includes various types of Portland cement, and examples of the types include low heat, moderate heat, normal, early strength, super early strength, sulfate resistant, and the like. Examples of the mixed cement includes blast furnace cement, fly ash cement, silica cement, and the like.

< Aggregate >

The second radically polymerizable resin composition of the present embodiment may contain an aggregate (K). When the aggregate (K) contains bound water, the water amount of the bound water of the aggregate (K) is not particularly limited, but is, for example, preferably not less than 0.10% by mass, more preferably not less than 0.20% by mass, even more preferably not less than 0.30% by mass, and most preferably not less than 0.40% by mass. The water amount of the bound water of the aggregate (K) is preferably 5.0% by mass or less, more preferably 2.5 % by mass or less, even more preferably 1.5 % by mass or less, and most preferably 1.0% by mass or less. The water amount of the bound water of the aggregate (K) is not particularly limited, but is preferably 0.2 parts by mass or more, more preferably 0.5 parts by mass or more, even more preferably 1.0 parts by mass or more, and most preferably 1.5 parts by mass or more, with respect to a total of 100 parts by mass of the second radically polymerizable compound (A-2) and the second radically polymerizable unsaturated monomer (B-2), for example. In addition, the water amount of the bound water in the aggregate (K) is preferably 7 parts by mass or less, more preferably 5 parts by mass or less, even

more preferably 2.5 parts by mass or less, and most preferably 2.0 parts by mass or less, with respect to a total of 100 parts by mass of the second radically polymerizable compound (A-2) and the second radically polymerizable unsaturated monomer (B-2).

The aggregate (K) is not particularly limited and may be used in mortar or concrete. Examples of aggregates include, but are not limited to, calcium carbonate, crushed stone, sandstone, cryolite, marble, quartz, limestone, silica sand, silica sand, and river sand. Lightweight aggregates such as sintered shale, silicic balloons and non-silicic balloon perlite can also be used from the viewpoint of weight reduction.

Calcium carbonate functions as a body pigment that is transparent in the coating film and does not hide the surface to be coated (substrate surface), and has functions such as filling of concave parts and reduction of paint cost. An example of this calcium carbonate on the market is TM-2 (manufactured by Yuko Kogyo Corporation).

Calcium carbonate has a specific particle size distribution, is excellent in dispersibility, and is porous, so that the specific gravity of the aggregate itself can be reduced to prevent dripping and improve film formation.

Silicate-based balloons include glass balloons, perlite, glass (silica) balloons, and fly ash balloons. Examples of non-silicic balloons include alumina balloons, zirconia balloons, and carbon balloons.

The amount of the aggregate (K) in the composition of the present embodiment is not particularly limited, but is preferably 200 to 900 parts by mass, more preferably 250 to 800 parts by mass, and even more preferably 300 to 500 parts by mass, with respect to a total of 100 parts by mass of the second radically polymerizable compound (A-2) and the second radically polymerizable unsaturated monomer (B-2). In particular, practical fluidity can be ensured if the aggregate amount is 200 parts by mass or more. In addition, if the aggregate amount is 900 parts by mass or less, the amount of trowel adhering can be reduced and workability can be prevented from decreasing.

< Fiber >

The radically polymerizable composition of the present embodiment may contain fibers if desired. Specific examples of fibers that can be used in the present embodiment include glass fibers, carbon fibers, vinylon fibers, nylon fibers, aramid fibers, polyolefin fibers, acrylic fibers, polyester fibers such as polyethylene terephthalate fibers, cellulose fibers, metal fibers such as steel fibers, and ceramic fibers such as alumina fibers. Among these, for example, polyolefin fibers can be used as a thixotropic agent. A thixotropic agent (thixotropy-imparting agent) is added for the purpose of imparting thixotropy.

The polyolefin fibers currently on the market are polyethylene products with trade names such as KEMIBESTO (registered trademark) FDSS -2 (average fiber length 0.6 mm), KEMIBESTO (registered trademark) FDSS -5 (average fiber length 0.1 mm), KEMIBESTO (registered trademark) FDSS -25 (average fiber length 0.6 mm, hydrophilized product), and KEMIBESTO (registered trademark) FDSS -50 (Average fiber length 0.1 mm, hydrophilized product) (each manufactured by Mitsui Petrochemical Industries, Ltd.).

Carbon fibers are not particularly limited and any of the known carbon fibers may be used. Examples include polyacrylonitrile (PAN) carbon fiber, rayon carbon fiber, and pitch carbon fiber. The carbon fibers may be used individually or in a mixture of two or more. In view of low cost and good mechanical properties, it is preferable to use PAN-based carbon fibers. Such carbon fibers are commercially available. Carbon fiber reinforced plastic (CFRP) may be used as carbon fiber.

The diameter of the carbon fiber is preferably 3 to 15 μm and more preferably 5 to 10 μm. Carbon fibers are usually 5 to 100 mm long. In the present embodiment, the carbon fiber may be cut into 10.0 mm to 100.0 mm, or furthermore, may be cut into 12.5 mm to 50.0 mm.

These fibers are preferably used in the form of fiber structures, biaxial meshes and triaxial meshes selected from, for example, plain weave, Zhu Xi weave, nonwoven fabric, mat, roving, chop, knitting, braids and their composite structures. For example, the fiber structure can be impregnated with a radically polymerizable composition and, in some cases, prepolymerized to be used as a prepreg.

Biaxial and triaxial meshes are used as meshes, for example. The length of one side of a square of a biaxial mesh (meshing) and the length of one side of an equilateral triangle of a triaxial mesh (meshing) are preferably 5 mm or more, and more preferably 10 to 20 mm. The use of biaxial or triaxial meshes can provide lightweight, economical, workable and durable concrete anti-flaking curing materials.

These fibers are preferably used to reinforce coating properties such as concrete anti-flaking and FRP waterproofing, or to manufacture FRP molded products.

Among these fibers, glass fibers and cellulose fibers, which are excellent in transparency, are preferable for applications such as concrete exfoliation prevention because the deteriorated state of the underlayer can be inspected visually from the outside.

The amount of such fibers is preferably 0.3 to 200 parts by mass, more preferably 0.5 to 100 parts by mass, and even more preferably 1.0 to 50 parts by mass, with respect to a total of 100 parts by mass of the second radically polymerizable compound (A-2) and the second radically polymerizable unsaturated monomer (B-2).

< Water Reducing Agent (M) >

The second radically polymerizable resin composition of the present embodiment may contain a usable water reducing agent (M) that can impart a water reducing property, if necessary. As water reducing agents, those known as water reducing agents used in concrete such as liquid or powder water reducing agents, AE water reducing agents, high performance water reducing agents, and high performance AE water reducing agents can be applied without restriction.
The polycarboxylic acid-based water reducing agent can suppress the decrease in fluidity of concrete caused by the addition of aluminosilicate with swelling properties mentioned above, and is also suitable from the viewpoint of maintaining good fluidity and improving workability.
Naphthalenesulfonic acid-based water reducing agents are suitable from the viewpoint of improving workability because of their high dispersal ability and high water reducing effect.
The water reducing agent is preferably contained in the second radically polymerizable resin composition by 0.1% to 3.0% by mass.

< Other Components >

The second radically polymerizable resin composition of the present embodiment may contain components other than the above components as long as it does not cause any particular hindrance to strength development or acid resistance of the cured body. The components that can be contained include, for example, hydraulic inorganic substances such as calcium sulfate and pozzolanic substances, as well as admixtures that can be used in mortar or concrete to impart properties such as condensation regulation, curing acceleration, curing delay, thickening, water retention, defoaming, water repellency, and waterproofing, and admixtures that can be used in mortar or concrete such as fibers made of materials such as metals, polymers, and carbon; pigments, extenders, foams, and clay minerals such as zeolite. Also, components that can be contained include coupling agents, plasticizers, anion-immobilized components, solvents, polyisocyanate compounds, surfactants, wet dispersants, waxes, thixotropic agents, and the like.

(Coupling Agent)

The second radically polymerizable resin composition of the present embodiment may use a coupling agent for the purpose of improving workability and bonding to the base material. The coupling agents include known silane-based coupling agents, titanate-based coupling agents, aluminum-based coupling agents and the like.
Examples of such coupling agents include a second silane coupling agent represented by $R^3$-Si($OR^4$)$_3$. Examples of $R^3$ includes aminopropyl, glycidyloxy, methacryloxy, N-phenylaminopropyl, mercapto, vinyl, and the like, and examples of $R^4$ include, for example, methyl, ethyl, and the like.
When the second radically polymerizable resin composition contains a coupling agent, the amount is preferably 0.001 to 10 parts by mass, with respect to a total of 100 parts by mass of the second radically polymerizable compound (A-2) and the second radically polymerizable unsaturated monomer (B-2).

(Plasticizer)

The second radically polymerizable resin composition of the present embodiment can be formulated with a plasticizer as needed. Although it is not particularly limited, for the purpose of adjusting physical properties and properties, examples of the plasticizer include phthalate esters such as dibutyl phthalate, diheptyl phthalate, di(2-ethylhexyl) phthalate and butyl benzyl phthalate; non-aromatic dibasic esters such as dioctyl adipate, dioctyl sebacate, dibutyl sebacate and isodecyl succinate; aliphatic esters such as butyl oleate and methyl acetyllysinolate; esters of polyalkylene glycols such as diethylene glycol dibenzoate, triethylene glycol dibenzoate and pentaerythritol esters; phosphates such as tricresyl phosphate and tributyl phosphate; trimellitic esters; polystyrenes such as polystyrene and poly-$\alpha$-methylstyrene; polybutadiene, polybutene, polyisobutylene, butadiene-acrylonitrile, polychloroprene; chlorinated paraffins; hydrocarbon-based oils such as alkyldiphenyls and partially hydrogenated terphenyls; process oils; polyethers such as polyether polyols such as polyethylene glycol, polypropylene glycol, polytetramethylene glycol, and the like, and derivatives that convert hydroxyl groups of these polyether polyols to ester groups, ether groups, and the like; epoxy plasticizers such as epoxidized soybean oil and benzyl epoxystearate; polyester-based plasticizers obtained from dibasic acids such as sebacic acid, adipic acid, azelaic acid and phthalic acid and divalent alcohols such as ethylene glycol, diethylene glycol, triethylene glycol, propylene glycol and dipropylene glycol; and vinyl polymers obtained by polymerizing vinyl monomers including acrylic plasticizers via various methods.
Among these, it is preferable to add a polymer plasticizer, which is a polymer with a number-average molecular weight of 500 to 15000, because the viscosity of the radically polymerizable composition and the mechanical properties such as tensile strength and elongation of the cured product obtained by curing the composition can be adjusted. In

addition, the polymer plasticizer is suitable because it can maintain the initial physical properties for a long period of time compared with a case where a low-molecular plasticizer, which is a plasticizer without a polymer component in the molecule, is used. The polymer plasticizer may or may not have functional groups, although this is not limited.

The number average molecular weight of the polymer plasticizer is more preferably 800 to 10000, and even more preferably 1000 to 8000. When the number-average molecular weight is 500 or more, the continuous outflow of the plasticizer due to the influence of heat, rainfall and water is suppressed, and the initial physical properties can be maintained for a long time. If the number-average molecular weight is 15000 or less, the viscosity rise can be suppressed to ensure sufficient workability.

(Anion Immobilizing Component)

Hydrotalcite or hydrocalumite can also be used to immobilize anions such as chloride ions.

These hydrotalcite may be natural or synthetic, and can be used with or without surface treatment, or with or without crystalline water. For example, basic carbonates represented by the following general formula (R) can be used.

$$M_x \cdot Mg_y \cdot Al_Z CO_3 (OH)_{xr+2y+3z-2} \cdot mH_2O \qquad (R)$$

(where M is an alkali metal or zinc, x is the number of 0 to 6, y is the number of 0 to 6, z is the number of 0.1 to 4, r is the valence of M, and m is the number of crystalline waters of 0 to 100).

Hydrocalumites may be natural or synthetic, and can be used with or without surface treatment or crystalline water. Examples of the hydrocalumites include the hydrocalumite represented by the following general formulas (S) and (T):

$$3CaO \cdot Al_2O_3 \cdot CaX_2 \cdot kH_2O \qquad (S)$$

(X is a monovalent anion, $k \leq 20$)

$$3CaO \cdot Al_2O_3 \cdot CaY \cdot kH_2O \qquad (T)$$

(Y is a bivalent anion, $k \leq 20$)

In addition, a nitrite ion ($NO_2^-$), which is said to have the effect of inhibiting corrosion of reinforcing steels, is supported on this calumite in the manufacturing stage, and examples of anions that can be supported include a nitrate ion ($NO_3^-$), a hydroxide ion ($OH^-$), an oxalate ion ($CH_3COO^-$), a carbonate ion ($CO_3^-$), and a sulfate ion ($SO_4^{2-}$).

These hydrotalcites, or hydrocalumites, can be used alone or by mixing them into a paste.

When mixed into a paste, it is assumed that the hydroxide ion ($OH^-$) coexisting during the hydration reaction has various effects on the anion exchange reaction, which is a characteristic of calumite. Hydrocalumites loaded with nitrite ions are good in terms of retaining the desired exchange reaction with chloride ions.

(Solvent)

The second radically polymerizable resin composition of the present embodiment can be formulated with a solvent as needed. Examples of the solvent which can be mixed include aromatic hydrocarbon solvents such as toluene and xylene; ester solvents such as ethyl acetate, butyl acetate, amyl acetate, and cellosolve acetate; and ketone-based solvents such as methyl ethyl ketone, methyl isobutyl ketone and diisobutyl ketone. These solvents may be used in the production of polymers.

(Polyisocyanate Compounds)

The second radically polymerizable resin composition of the present embodiment may contain a polyisocyanate compound. The polyisocyanate compound reacts with the hydroxyl group of the second radically polymerizable compound (A-2) to form a cured coating film.

The polyisocyanate compound contains two or more isocyanate groups in the molecule, and the isocyanate groups may be blocked with a blocking agent or the like.

Examples of polyisocyanate compounds that are not blocked with a blocking agent include aliphatic diisocyanates such as lysine diisocyanate, hexamethylene diisocyanate and trimethylhexane diisocyanate; cyclic aliphatic diisocyanates such as hydrogenated xylylene diisocyanate, isophorone diisocyanate, methylcyclohexane-2, 4 (or 2, 6)-diisocyanate, 4,4'-methylene bis(cyclohexyl isocyanate), 1,3-(isocyanatomethyl) cyclohexane; aromatic diisocyanates such as tolylene diisocyanate, xylylene diisocyanate and diphenylmethane diisocyanate; polyisocyanates such

as trivalent or more polyisocyanates such as lysine triisocyanates, as well as adducts of each of these polyisocyanates with polyhydric alcohols, low-molecular-weight polyester resins or water; cyclized polymers of the above diisocyanates (for example, isocyanurate); biuret type adducts; and the like. Among these, isocyanurate of hexamethylene diisocyanate is preferred.

These polyisocyanate compounds may be used alone or in combination of two or more.

When the second radically polymerizable resin composition contains a polyisocyanate compound, the amount is preferably 0.1 to 50 parts by mass, more preferably 1 to 30 parts by mass, and even more preferably 2 to 20 parts by mass, with respect to a total of 100 parts by mass of the second radically polymerizable compound (A-2) and the second radically polymerizable unsaturated monomer (B-2).

The blocked polyisocyanate compound is obtained by blocking the isocyanate group of the above polyisocyanate compound with a blocking agent.

Examples of the blocking agents include phenolic compounds such as phenol, cresol, xylenol, and the like; ε-caprolactam; lactams such as δ-valerolactam, γ-butyrolactam and β-propiolactam; alcohol-based compounds such as methanol, ethanol, nor iso-propyl alcohol, n-, iso- or tert-butyl alcohol, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, benzyl alcohol; oxime-based compounds such as formamidoxime, acetaldoxime, acetoxime, methylethylketoxime, diacetylmonoxime, benzophenone oxime, and cyclohexaneoxime; active methylene-based compounds such as dimethyl malonate, diethyl malonate, ethyl acetoacetate, methyl acetoacetate, and acetylacetone. The isocyanate group of the polyisocyanate can be easily blocked by mixing the polyisocyanate with the blocking agent.

When the polyisocyanate compound is an unblocked polyisocyanate compound, mixing the second radically polymerizable compound (A-2) and the polyisocyanate compound in the second radically polymerizable resin composition of the present embodiment causes a reaction between both, therefore, it is preferable to separate the second radically polymerizable compound (A-2) and the polyisocyanate compound before use and to mix both during use.

A curing catalyst can be used to react the polyisocyanate compound with the second radically polymerizable compound (A-2). Suitable curing catalysts include, for example, organometallic catalysts such as tin octylate, dibutyltin di(2-ethylhexanoate), dioctyltin di(2-ethylhexanoate), dioctyltin diacetate, dibutyltin dilaurate, dibutyltin oxide, dioctyltin oxide, lead 2-ethylhexanoate, and the like.

When the second radically polymerizable resin composition contains the above curing catalyst, the amount is preferably 0.01 to 5 parts by mass, and more preferably 0.05 to 4 parts by mass, with respect to a total of 100 parts by mass of the second radically polymerizable compound (A-2) and the second radically polymerizable unsaturated monomer (B-2).

(Surfactants)

The second radically polymerizable resin composition of the present embodiment may contain a surfactant.

Examples of the surfactants include anionic surfactants, nonionic surfactants, cationic surfactants, and amphoteric surfactants. These surfactants may be used alone or in combination of two or more.

Among these surfactants, one or more selected from anionic surfactants and nonionic surfactants are preferred.

Examples of anionic surfactants include alkyl sulfate esters such as sodium lauryl sulfate and triethanolamine lauryl sulfate; polyoxyethylene alkyl ether sulfates such as sodium polyoxyethylene lauryl ether sulfate and triethanolamine polyoxyethylene alkyl ether sulfate; sulfonates such as dodecylbenzenesulfonate, sodium dodecylbenzenesulfonate, sodium alkylnaphthalenesulfonate, and sodium dialkylsulfosuccinate; fatty acid salts such as sodium stearate soap, potassium oleate soap, and potassium castor oil soap; naphthalenesulfonic acid formalin condensates and special polymer-based compounds.

Examples of non-ionic surfactants include polyoxyethylene alkyl ethers such as polyoxy lauryl ethers, polyoxyethylene cetyl ethers, polyoxyethylene stearyl ethers, polyoxyethylene oleyl ethers, polyoxyethylene distyrenic phenyl ethers, polyoxyethylene tribenzyl phenyl ethers, polyoxyethylene polyoxypropylene glycols, and the like; sorbitan fatty acid esters such as polyoxyalkylene alkyl ethers, sorbitan monolaurilate, sorbitan monopalmitate and sorbitan monostearate; polyoxyethylene-sorbitan fatty acid esters such as polyoxyethylene-sorbitan monolaurate, polyoxyethylene-sorbitan monolaurate, polyoxyethylene-sorbitan monopalmitate, and the like; polyoxyethylene sorbitol fatty acid esters such as polyoxyethylene sorbit tetraoleate; and glycerin fatty acid esters such as glycerin monostearate and glycerin monooleate.

Among these, polyoxyethylene lauryl ether, polyoxyethylene cetyl ether, polyoxyethylene stearyl ether, polyoxyethylene oleyl ether, and polyoxyethylene alkyl ether are preferred. In addition, HLB (hydrophile-lipophil balance) of a nonionic surfactant is preferred at 5 to 15, and is more preferred at 6 to 12.

When the second radically polymerizable resin composition contains the surfactant, the amount thereof is preferably 0.01 to 10 parts by mass, more preferably 0.05 to 7 parts by mass, and even more preferably 0.1 to 5 parts

by mass, with respect to a total of 100 parts by mass of the second radically polymerizable compound (A-2) and the second radically polymerizable unsaturated monomer (B-2).

(Wet Dispersant)

The second radically polymerizable resin composition of the present embodiment may, for example, contain a wet dispersant to improve permeability to a wet or submerged repair site.

The wet dispersants include fluorine-based wet dispersants and silicone-based wet dispersants, which may be used alone or in combination of two or more kinds.

Commercial fluorine wet dispersants include MEGAFACE (registered trademark) F 176, MEGAFACE (registered trademark) R 08 (manufactured by Dainippon Ink and Chemicals Co., Ltd.), PF 656, PF 6320 (manufactured by OMNOVA), Troisol S -366 (manufactured by Troy Chemical Co., Ltd.), Fluorinert FC 430 (manufactured by 3M Japan Co., Ltd.), and polysiloxane polymer KP -341 (manufactured by Shinetsu Chemical Co., Ltd.).

Commercial silicone-based wet dispersants include BYK (registered trademark) - 322, BYK (registered trademark) -377, BYK (registered trademark) -UV 3570, BYK (registered trademark) -330, BYK (registered trademark) -302, BYK (registered trademark) -UV 3500, BYK -306 (manufactured by BYK JAPAN K. K.), and polysiloxane polymer KP -341 (manufactured by Shinetsu Chemical Industry Co., Ltd.).

Preferably, the silicone-based wet dispersant contains a compound represented by formula (U).

[Chemical Formula 2]

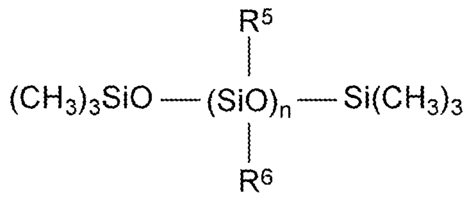

・・・(U)

(In the formula, $R^5$ and $R^6$ independently denote a hydrocarbon group that may contain an aromatic ring with 1 to 12 carbon atoms or $-(CH_2)_3O(C_2H_4O)_p(CH_2CH(CH_3)O)_qR'$,
where n is an integer of 1 to 200, R' denotes an alkyl group with 1 to 12 carbon atoms, p and q are integers, respectively, and q/p = 0 to 10.)

Commercial silicone-based wet dispersants containing the compound represented by formula (U) include BYK (registered trademark) -302 and BYK (registered trademark) - 322 (manufactured by BYK JAPAN K. K.).

When the second radically polymerizable resin composition of the present embodiment contains a wet dispersant, the amount is preferably 0.001 to 5 parts by mass, and more preferably 0.01 to 2 parts by mass, with respect to a total of 100 parts by mass of the second radically polymerizable compound (A-2) and the second radically polymerizable unsaturated monomer (B-2).

(Wax)

The second radically polymerizable resin composition of the present embodiment may contain wax.

The waxes include paraffin waxes and polar waxes, which may be used alone or in combination of two or more.

As the paraffin waxes, known ones with various melting points can be used. As the polar waxes, those having both polar and non-polar groups in the structure can be used, specifically, NPS (registered trademark) -8070, NPS (registered trademark) -9125 (manufactured by Nippon Seiro Co., Ltd.), EMANON (registered trademark) 3199, EMANON (registered trademark) 3299 (manufactured by Kao Corporation), and the like.

When the second radically polymerizable resin composition of the present embodiment contains wax, the amount is preferably 0.05 to 4 parts by mass, and more preferably 0.1 to 2.0 parts by mass, with respect to a total of 100 parts by mass of the second radically polymerizable compound (A-2) and the second radically polymerizable unsaturated monomer (B-2).

(Second Thixotropic Agent)

The second radically polymerizable resin composition of the present embodiment may use a second thixotropic agent for the purpose of viscosity adjustment or the like to ensure workability on a vertical surface or a ceiling surface.

Inorganic and organic thixotropic agents can be used as the second thixotropic agents. As the organic thixotropic

agents, hydrogenated castor oil, amide, oxidized polyethylene, vegetable oil polymerized oil, surfactants, and composites combining them can be used, and specific examples include DISPARLON (registered trademark) 6900 -20 X (Kusumoto Chemical Co., Ltd.).

Examples of inorganic thixotropic agents include silica and bentonite. Examples of hydrophobic agents include Leoroseal (registered trademark) PM -20 L (vapor-phase silica manufactured by Tokuyama Corporation, Ltd.) and AEROSIL (registered trademark) R-106 (Aerosil Japan, Ltd.), and examples of hydrophilic agents include AEROSIL (registered trademark) -200 (Aerosil Japan, Ltd.). From the viewpoint of further improving the thixotropy, a hydrophilic calcined silica with BYK (registered trademark)-R605 or BYK (registered trademark)-R606 (manufactured by BYK JAPAN KK), which is a thixotropic agent modifier, can also be suitably used. When the second radically polymerizable resin composition of the present embodiment contains the second thixotropic agent, the amount is preferably 0.01 to 10 parts by mass, and more preferably 0.1 to 5 parts by mass, with respect to a total of 100 parts by mass of the second radically polymerizable compound (A-2) and the second radically polymerizable unsaturated monomer (B-2).

<Water>

The second radically polymerizable resin composition of the present embodiment contains substantially no water from the viewpoint of obtaining practical strength. That is, when preparing the second radically polymerizable resin composition, water is not added as a component of the composition. For example, the water amount of the second radically polymerizable resin composition is preferably less than 0.25 parts by mass, more preferably 0.20 parts by mass or less, even more preferably 0.15 parts by mass or less, and most preferably 0.10 parts by mass or less, with respect to a total of 100 parts by mass of the second radically polymerizable compound (A-2) and the second radically polymerizable unsaturated monomer (B-2).

<Method for Producing Second Radically Polymerizable Resin Composition >

The method for producing the second radically polymerizable resin composition of the present embodiment is not particularly limited, and methods known in the art can be used. For example, the second radically polymerizable resin composition can be produced by mixing the second radically polymerizable compound (A-2) and the second radically polymerizable unsaturated monomer (B-2) with the second metal-containing compound (E-2) as needed, and then mixing the second radical polymerization initiator (D-2), the aggregate (K), and the expansive additive (J). It is preferable that the step of adding water is not included in the method for producing the second radically polymerizable resin composition. When water is added, the second radically polymerizable resin composition contains free water, and the compressive strength of the cured product of the second radically polymerizable resin composition is deteriorated. However, the bound water contained in raw materials such as the aggregate (K) has little effect on the compressive strength of the cured product, unlike the free water added.

One embodiment of a method for producing a second radically polymerizable resin composition of the present embodiment has a step (2-S1) of mixing a second metal-containing compound (E-2) with a second radically polymerizable compound (A-2) and a second radically polymerizable unsaturated monomer (B-2) as needed to obtain a mixture (2-i), a step (2-S2) of mixing a second radical polymerization initiator (D-2) with the obtained mixture (2-i) to obtain a mixture (2-ii), and a step (2-S3) of mixing an aggregate (K) and an expansive additive (J) with the obtained mixture (2-ii) to obtain a second radically polymerizable resin composition.

In the step (2-S1) to obtain the mixture (2-i) (sometimes simply referred to as "Step (2-S1)"), in addition to mixing a second metal-containing compound (E-2) with a second radically polymerizable compound (A-2) and a second radically polymerizable unsaturated monomer (B-2), a second polymerization inhibitor (H-2), a second curing retarder (I-2), a second thiol compound (F-2), or the like may be further mixed as needed.

In the step (2-S3) for obtaining the second radically polymerizable resin composition (sometimes simply referred to as "Step (2-S3)"), the mixture (2-ii) obtained in the step (2-S2) for obtaining the mixture (2-ii) (sometimes simply referred to as "Step (2-S2)") may be further mixed with a fiber (L), a water reducing agent (M), and the like, as needed, in addition to mixing the expansive additive (J) and the aggregate (K). As specific examples of the aggregate (K), for example, No. 9 silica sand, Calcium Carbonate TM-2, Perlite FL-0, HARDLITE B-04, Enshu No. 5.5 silica sand, N 50 silica sand, N 40 silica sand, N 90 silica sand, and the like can be used.

The second radically polymerizable resin composition thus produced can be cured at room temperature and has excellent workability, early strength development and curability. Since the second radically polymerizable resin composition has an expansive additive (J), the rate of shrinkage during curing is small, and the expansion rate of the cured product can be greater than zero depending on the conditions.

[Cured Product from Recess Filling Material Kit]

The cured product of the recess filling material kit of the present embodiment has a first cured product which is a cured product of the first radically polymerizable resin composition and a second cured product which is a cured product of the second radically polymerizable resin composition. In such a way that the first cured product is formed on the surface of the recess and the second cured product is formed on the surface of the first cured product, the cured product of the recess filling material kit is formed in the recess.

< Cured Product of First Radically Polymerizable Resin Composition >

The cured product of the first radically polymerizable resin composition of the present embodiment is obtained by curing the above first radically polymerizable resin composition.

"Curing Method of First Radically Polymerizable Resin Composition"

For example, when the first radically polymerizable resin composition contains a thermal radical polymerization initiator, the same method as the curing method for the second radically polymerizable resin composition described later can be used.

< Cured Product of Second Radically Polymerizable Resin Composition >

The cured product of the second radically polymerizable resin composition of the present embodiment is obtained by curing the above second radically polymerizable resin composition.

"Curing Method of Second Radically Polymerizable Resin Composition"

When the second radically polymerizable resin composition of the present embodiment contains a thermal radical polymerization initiator (D-21), one example of the curing method for the second radically polymerizable resin composition of the present embodiment is the curing method in which the second radically polymerizable resin composition of the present embodiment is applied to the surface of the base material and cured at room temperature. For example, the second radically polymerizable resin composition of the present embodiment is used as a recess filling material for an inorganic structure. Since the second radically polymerizable resin composition of the present embodiment contains an expansive additive (J), the cured product obtained does not shrink significantly as in the conventional method even after a certain time elapses.

Examples of the base materials include concrete, asphalt concrete, mortar, brick, wood, and metal; as well as thermosetting resins such as phenol resin, epoxy resin, melamine resin, urea resin, unsaturated polyester resin, vinyl ester resin, alkyd resin, polyurethane, and polyimide; and thermoplastic resins such as polyethylene, polypropylene, polyvinyl chloride, polystyrene, polyvinyl acetate, polyurethane, Teflon (registered trademark), ABS resin, AS resin, and acrylic resin.

When the second radically polymerizable resin composition of the present embodiment contains a photoradical polymerization initiator (D-22), a light-curing timing includes a method in which the second radically polymerizable resin composition is applied to the base material and then light-cured, or a method in which a sheet prepolymerized with the second radically polymerizable resin composition (also called B-staged or pre-preg) is prepared and the sheet is adhered to the base material and then light-cured.

As a light source, any light source having a spectral distribution in a photosensitive wavelength range of the photoradical polymerization initiator (D-22) is sufficient, and for example, sunlight, ultraviolet lamps, near-infrared lamps, sodium lamps, halogen lamps, fluorescent lamps, metal halide lamps, LEDs, and the like can be used. It is also possible to use two or more photoradical polymerization initiators (D-22) in combination, use a wavelength cutting filter as a light source, or use a specific wavelength of an LED to select the wavelengths needed for prepolymerization and main polymerization. As for the wavelength used for prepolymerization, a long wavelength with low energy level is desirable, and the degree of polymerization can be easily controlled, especially when near-infrared light is used. In the present embodiment, ultraviolet light (ultraviolet) refers to light in a wavelength range of 280 nm to 380 nm, visible light (visible line) refers to light in a wavelength range of 380 nm to 780 nm, and near-infrared light (near-infrared) refers to light in a wavelength range of 780 nm to 1200 nm. The irradiation time of the lamp required for prepolymerization can not be generally specified because the effective wavelength range of the light source, the output, the irradiation distance, the thickness of the composition, and the like, are affected, but the lamp should be irradiated for 0.01 hours or more, for example, and preferably for 0.05 hours or more.

[Recess Filling Method (Mortar Filling Method in Recess)]

The recess filling method or the mortar filling method in the recess can be widely used in civil engineering and construction work where filling is required. The material constituting the recess may be a structure containing one or more of a concrete member, a metal member and a resin member. Also, the recess is only illustrative because a 10-cm square cube is the most appropriate when considering the shrinkage of the material, and its shape can be a cube, a box, a sphere, or a cone.
Regarding the recess, for example, tunnels, manholes, waterways, conduits, guardrails, signs, anchor bolts, lock bolts, and reinforcing steel structures are examples of structures in which recesses occur according to the present embodiment, regardless of material. Alternatively, parts that were repaired in the past, such as parts repaired with cement concrete, parts repaired with polymer cement mortar, parts repaired with epoxy resin mortar or urethane resin, and the parts reinforced with iron plate are examples.
One aspect of the recess filling method or the mortar filling method in the recess of the present embodiment may include an underlayer forming step in which a first radically polymerizable resin composition is applied to the surface of the recess to form an underlayer, and a filling step in which the surface of the underlayer formed on the surface of the recess is filled with a second radically polymerizable resin composition.
Another aspect of the recess filling method or the mortar filling method in the recess of the present embodiment may include a step of applying a first radically polymerizable resin composition to part or all of the surface of the recess, a step of filling a second radically polymerizable resin composition, and a step of curing the first radically polymerizable resin composition and the second radically polymerizable resin composition.
Another aspect of the recess filling method or the mortar filling method in the recess of the present embodiment may include a step of applying a first radically polymerizable resin composition to part or all of the surface of the recess, a step of curing the first radically polymerizable resin composition and forming a cured product layer of the first radically polymerizable resin composition on the surface of the recess, a step of filling the recess with a second radically polymerizable resin composition, and a step of curing the second radically polymerizable resin composition.
Another aspect of the recess filling method or the mortar filling method in the recess of the present embodiment may include a step of applying a first radically polymerizable resin composition to part or all of the surface of the recess, a step of drying or semi-curing the first radically polymerizable resin composition to form a first radically polymerizable resin composition layer or a semi-cured layer on the surface of the recess, a step of filling a second radically polymerizable resin composition into the recess having a first radically polymerizable resin composition layer or a semi-cured layer, and a step of curing the first radically polymerizable resin composition and the second radically polymerizable resin composition.
Another aspect of the recess filling method or the mortar filling method in the recess of the present embodiment may include a step of applying a first radically polymerizable resin composition to part or all of the surface of the recess, a step of filling a second radically polymerizable resin composition, and a step of curing the first radically polymerizable resin composition and the second radically polymerizable resin composition.
When the recess is, for example, a bolt box, bolt box filling can be performed by the recess filling method.
For example, the bolt-box filling method may have an underlayer forming step in which the surface of the bolt-box is coated with the first radically polymerizable resin composition to form an underlayer, and a filling step in which the surface of the underlayer formed on the surface of the bolt-box is filled with the second radically polymerizable resin composition.

(EXAMPLES)

The invention will be described in more detail below with examples, but the invention is not in any way limited by these examples.
The raw materials used to produce each of the first and second radically polymerizable resin compositions in the examples and comparative examples are as follows.

<First Radically Polymerizable Compound (A-1) and First Radically Polymerizable Unsaturated Monomer (B-1)>

(Synthesis Example 1)

Synthesis of Radically Polymerizable Compounds (A-i) and Mixture with First Radically Polymerizable Unsaturated Monomer (B-1)
386.3 g of SR-16 H (1,6-hexanediol diglycidyl ether manufactured by Sakamoto Yakuhin kogyo Co., Ltd.; epoxy equivalent 157), 0.30 g of methyl hydroquinone, and 1.80 g of 2,4,6-tris (dimethylaminomethyl) phenol (SEIKUOR TDMP, manufactured by Seiko Chemical Co., Ltd.) were placed in a 1-L, four-neck separable flask equipped with an agitator,

a reflux cooling tube, a gas introduction tube, and a thermometer, and the temperature was raised to 110°C. After dropping 211.6 g of methacrylic acid for about 30 minutes, the temperature was raised to 130°C and the reaction was carried out for about 4 hours until the acid value was 20 mg/KOHg to synthesize vinyl ester resin, which is a radically polymerizable compound (A-i).

Then, by adding 400.0 g of dicyclopentenyloxyethyl methacrylate (FA-512 MT, manufactured by Hitachi Chemical Co., Ltd.) as the first radically polymerizable unsaturated monomer (B-1), 1000.0 g of a non-styrene-type mixture with a viscosity of 250 mPa s at 25°C and a radically polymerizable compound (A-i) component ratio of 60% by mass was obtained.

Radically Polymerizable Compounds (A-ii)

Lipoxy (registered trademark) R-806 (manufactured by Showa Denko K.K., contains 45 % by mass styrene as the first radically polymerizable unsaturated monomer (B-1).) was used as the vinyl ester resin.

< First Radical Polymerization Initiator (D-1) >

Parkmill (registered trademark) H-80 (cumene hydroperoxide (CHP), manufactured by NOF Corporation) was used as the thermal radical polymerization initiator (D-i).

Permec (registered trademark) N (methyl ethyl ketone peroxide, manufactured by NOF Corporation) was used as the thermal radical polymerization initiator (D-ii).

Parkmill (registered trademark) P (diisopropylbenzene hydroperoxide, manufactured by NOF Corporation) was used as the thermal radical polymerization initiator (D-iii).

< First Metal-Containing Compound (E-1) >

Manganese octylate (manufactured by Toei Chemical Industry, hexoate manganese, amount of manganese in total product 6 % by mass, molecular weight 341.35) was used as a metal soap (E-i).

Cobalt octyrate (manufactured by Toei Chemical Industry, hexoate cobalt, cobalt amount in total product 8 % by mass, molecular weight 345.34) was used as a metal soap (E-ii).

< First Thiol Compound (F-1) >

As the secondary thiol compound (F-i), a bifunctional secondary thiol, Karenz MT (registered trademark) BD1 (1, 4-bis (3-mercaptobutyryloxy) butane, molecular weight 299.43) manufactured by Showa Denko K.K. was used.

< First Polymerization Inhibitor H-1 >

Tertiary butyl catechol (manufactured by Tokyo Chemical Industry Co., Ltd.) was used as a polymerization inhibitor (H-i).

< First Curing Retarder (I-1) >

4-H-TEMPO (Polystop 7300 P, 4-hydroxy-2, 2, 6, 6-tetramethylpiperidine-1-oxyl free radical, manufactured by Hakuto Co., Ltd.) was used as the first curing retarder (I-i).

<Second Radically Polymerizable Compound (A-2) and Second Radically Polymerizable Unsaturated Monomer (B-2) >

(Synthesis Example 2)

Synthesis of Radically Polymerizable Compounds (A-iii) and Mixture with Second Radically Polymerizable Unsaturated Monomer (B-2)

To a 1 L capacity four-neck separable flask equipped with an agitator, a reflux cooling tube, a gas introduction tube and a thermometer, 179.0 g of bisphenol A type epoxy resin (Epomix (registered trademark) R140 P, manufactured by Mitsui Chemicals, Inc.; epoxy equivalent 188), 214.2 g of DENACOL EX-212 (1,6-hexanediol diglycidyl ether manufactured by Nagase ChemteX Corporation; epoxy equivalent 150), 0.30 g of methyl hydroquinone and 1.80 g of DMP-30 (2, 4, 6-tris (dimethylaminomethyl) phenol manufactured by Tokyo Kasei Kogyo Co., Ltd.) were added and the temperature was raised to 110°C. After being heated to 110°C, 204.7 g of methacrylic acid (manufactured by Mitsubishi

Rayon Co., Ltd.) was dropped over about 30 minutes, and then was warmed to 130°C and reacted for about 4 hours until the acid value reached 14 mg/KOHg to synthesize vinyl ester resin, as a radically polymerizable compound (A-iii).

Then, by adding 300.0 g of dicyclopentenyloxyethyl methacrylate (manufactured by Hitachi Chemical, FA-512 MT) and 100.0 g of dicyclopentanyl methacrylate (manufactured by Hitachi Chemical, FA-513 M) as the second radically polymerizable unsaturated monomer (B-2), 1000.0 g of a non-styrene type mixture with a viscosity of 280 mPa s at 25°C and a radically polymerizable compound (A-iii) component ratio of 60% by mass was obtained.

Radically Polymerizable Compound (A-iv)

Rigolac (registered trademark) SR-110 N (Showa Denko K.K., 40% by mass styrene amount as the second radically polymerizable unsaturated monomer (B-2)) was used as the unsaturated polyester resin.

(Synthesis Example 3)

Synthesis of Radically Polymerizable Compounds (A-v) and Mixture with Second Radically Polymerizable Unsaturated Monomer (B-2)

170.44 g of diphenylmethane diisocyanate (Milionate MT manufactured by Tosoh Co., Ltd.), 136.35 g of Adeca polyether P-400 (manufactured by Polyetherdiol ADEKA Corporation), 0.11 g of dibutyl hydroxytoluene (manufactured by BHT Tokyo Chemical Industry Co., Ltd.) and 0.02 g of dibutyl tin dilaurate (KS-1260 manufactured by Kyodo Pharmaceutical Co., Ltd.) were added to a 1 L capacity four-neck separable flask equipped with an agitator, a reflux cooling tube, a gas introduction tube and a thermometer, and the flask was allowed to react at 60°C for 3 hours. Then, 93.08 g of 2-hydroxyethyl methacrylate (2-HEMA, manufactured by NIPPON CATALYST CO., LTD.) was added to the reaction mixture over 30 minutes while being stirred, and the mixture was allowed to react for about 3 hours after the addition of the drop to synthesize a urethane methacrylate resin, as a radically polymerizable compound (A-v).

Then, by adding 600.0 g of dicyclopentenyloxyethyl methacrylate (manufactured by Hitachi Chemical, FA-512 MT) as the second radically polymerizable unsaturated monomer (B-2), 1000.0 g of a non-styrene-type mixture with a radically polymerizable compound (A-v) component ratio of 40% by mass was obtained with a viscosity of 420 mPa s at 25°C.

(Synthesis Example 4)

Synthesis of Radically Polymerizable Compound (A-vi) and Mixture with Second Radically Polymerizable Unsaturated Monomer (B-2)

140.95 g of diphenylmethane diisocyanate (Milionate MT, manufactured by Tosoh Co., Ltd.), 281.91 g of Actcol D-1000 (Polypropylene Glycol, manufactured by Mitsui Chemicals Co., Ltd.), 0.15 g of dibutyl hydroxytoluene (manufactured by BHT Tokyo Chemical Industry Co., Inc.) and 0.03 g of dioctyl tin dilaurate (NEOSTANE U-810 manufactured by Nitto Kasei Co., Ltd.) were added to a four-neck separable flask with a capacity of 1 L equipped with an agitator, a reflux cooling tube, a gas introduction tube and a thermometer, and the flask was allowed to react at 70°C for 2 hours. Then, 76.96 g of 2-hydroxyethyl methacrylate (2-HEMA, manufactured by NIPPON CATALYST CO., LTD.) was added to the reaction mixture for 30 minutes while being stirred, and the mixture was allowed to react for about 3 hours after the addition of the drop to synthesize a urethane methacrylate resin, which is a radically polymerizable compound (A-vi).

Then, by adding 150.0 g of phenoxyethyl methacrylate (LIGHT ESTER PO Kyoeisha Chemical Co., Ltd.) and 350.0 g of dicyclopentenyloxyethyl methacrylate (FA-512 MT, manufactured by Hitachi Chemical) as the second radically polymerizable unsaturated monomer (B-2), as the second radically polymerizable unsaturated monomer (B-2), 1000.0 g of a non-styrene-type mixture with a radically polymerizable compound (A-vi) component ratio of 50% by mass and a viscosity of 570 mPa s at 25°C was obtained.

(Synthetic example 5)

Mixture with Radically Polymerizable Compound (A-vii) and Second Radically Polymerizable Unsaturated Monomer (B-2)

135.72 g of diphenylmethane diisocyanate (Milionate MT manufactured by Tosoh Co., Ltd.), 54.28 g of Adeca polyether P-400 (polyether diol, manufactured by ADEKA Corporation), 135.72 g of Actcol D-1000 (polypropylene glycol, manufactured by Mitsui Chemicals Co., Ltd.), 0.15 g of dibutyl hydroxytoluene (BHT, manufactured by Tokyo Chemical Industries Co., Ltd.) and 0.03 g of dioctyl tin dilaurate (NEOSTANE U-810 manufactured by Nitto Kasei Co., Ltd.) were added to a four-neck separable flask with a capacity of 1 L equipped with an agitator, a reflux cooling tube, a gas

introduction tube and a thermometer, and the mixture was allowed to react at 70°C for 2 hours. Then, 74.10 g of 2-hydroxyethyl methacrylate (2-HEMA, manufactured by Nippon Shokubai Co., Ltd.) was added to the reaction mixture over 30 minutes while being stirred, and the mixture was allowed to react for about 3 hours after the addition of the drop to synthesize a urethane methacrylate resin, which is a radically polymerizable compound (A-vii).

Then, by adding 150.0 g of lauryl methacrylate (LIGHT ESTER L, manufactured by Kyoeisha Chemical Co., Ltd.) and 450.0 g of dicyclopentenyloxyethyl methacrylate (FA-512 MT, manufactured by Hitachi Chemical Co., Ltd.), as the second radically polymerizable unsaturated monomer (B-2), 1000.0 g of a non-styrene-type mixture with a radically polymerizable compound (A-vii) component ratio of 40% by mass and a viscosity of 320 mPa s at 25°C was obtained.

< Second Radical Polymerization Initiator (D-2) >

Parkmill (registered trademark) H-80 (cumene hydroperoxide (CHP), manufactured by NOF Corporation) was used as the thermal radical polymerization initiator (D-i).

Permec (registered trademark) N (methyl ethyl ketone peroxide, manufactured by NOF Corporation) was used as the thermal radical polymerization initiator (D-ii).

Parkmill (registered trademark) P (diisopropylbenzene hydroperoxide, manufactured by NOF Corporation) was used as the thermal radical polymerization initiator (D-iii).

<Second Metal-Containing Compounds (E-2) >

Manganese octylate (manufactured by Toei Chemical Industry, hexoate manganese, amount of manganese in total product 6 % by mass, molecular weight 341.35) was used as a metal soap (E-i).

Cobalt octyrate (manufactured by Toei Chemical Industry, hexoate cobalt, cobalt amount in total product 8 % by mass, molecular weight 345.34) was used as the metal soap (E-ii).

< Second Thiol Compound (F-2) >

A bifunctional secondary thiol, Karenz MT (registered trademark) BD1 (1,4-bis (3-mercaptobutyryloxy) butane, molecular weight 299.43) manufactured by Showa Denko K.K. was used as the secondary thiol compound (F-i) was used.

< Second Polymerization Inhibitor (H-2) >

Tertiary butyl catechol (manufactured by Tokyo Chemical Industry Co., Ltd.) was used as the polymerization inhibitor (H-i).

2,6 di-tert-butyl-4 methylphenol (manufactured by Tokyo Chemical Industry Co., Ltd.) was used as a polymerization inhibitor (H-ii).

< Second Curing Retarder (1-2) >

4-H-TEMPO (Polystop 7300 P, 4-hydroxy-2, 2, 6, 6-tetramethylpiperidine-1-oxyl free radical, manufactured by Hakuto Co., Ltd.) was used as the second curing retarder (I-i).

< Expansive Additive (J) >

Denka Power CSA Type S (quicklime-ettringite composite expansive additive, manufactured by Denka) was used as the expansive additive (J-i).

N-EX (quicklime expansive additive, manufactured by Taiheiyo Materials Co., Ltd.) was used as the expansive additive (J-ii).

< Aggregate >

No. 9 Silica Sand
Calcium Carbonate TM-2
Perlite FL-0
HARDLITE B-04
Enshu No. 5.5 Silica Sand

N 50 Silica Sand
N 40 Silica Sand

< Fiber >

KEMIBESTO (registered trademark) FDSS-5 (multibranched fiber made of polyolefin, manufactured by Mitsui Fine Chemicals Co., Ltd.) was used.

(Examples 1 to 6, Comparative Examples 1 to 2)

"Preparation of First Radically Polymerizable Resin Composition"

(1) Resin Adjustment Step (1-S1):

The first metal-containing compound (E-1), the first thiol compound (F-1), the first polymerization inhibitor (H-1), and the first curing retarder (1-1) were mixed well into a mixture of the first radically polymerizable compound (A-1) and the first radically polymerizable unsaturated monomer (B-1) in the amount shown in Table 1 to prepare the mixture (1-i).

(2) Acid Compound Mixing Step (1-S2):

The mixture (1-ii) was prepared by mixing the mixture (1-i) obtained in step (1-S1) with an acidic compound (C) in the amount shown in Table 1.

(3) Curing Agent Mixing Step (1-S3):

The mixture (1-ii) obtained in step (1-S2) was mixed with a first radical polymerization initiator (D-1) in the amount shown in Table 1 to prepare a first radically polymerizable resin composition (curable primer).

For the first radically polymerizable resin compositions PC-1 to PC-6 and cPC-1 to cPC-2 obtained by the above method at the amount of each raw material in Examples 1 to 6 and Comparative Examples 1 to 2 shown in Table 1, various evaluations were performed according to the following methods. The results are shown in Table 1.

[Table 1]

| | | | Example 1 | Example 2 | Example 3 | Example 4 | Example 5 | Example 6 | Comparative Example 1 | Comparative Example 2 |
|---|---|---|---|---|---|---|---|---|---|---|
| | | Composition | PC-1 | PC-2 | PC-3 | PC-4 | PC-5 | PC-6 | cPC-1 | cPC-2 |
| First radically polymerizable resin composition (curable primer) | First radically polymerizable compound (A-1) | Radically polymerizable compound (A-i) | 44.26 | 44.26 | 44.26 | | 44.26 | 44.46 | 44.26 | |
| | | Radically polymerizable compound (A-ii) | | | | 51.70 | | | | 51.70 |
| | First radically polymerizable unsaturated monomer (B-1) | Styrene | | | | 47.30 | | | | 47.30 |
| | | Dicyclopentenyloxyethyl methacrylate | 54.09 | 54.09 | 54.09 | | 54.09 | 54.34 | 54.09 | |
| | Acidic compound (C) | Acrylic acid | 1.0 | 10.0 | 20.0 | 5.0 | | 2.5 | 0.0 | 0.0 |
| | | Propionic acid | | | | | 1.0 | | | |
| | First radical Polymerization Initiator (D-1) | Parkmill H-80 | 2.0 | 2.0 | 2.0 | | 2.0 | | 2.0 | |
| | | Parkmill P | | | | | | 4.0 | | |
| | | Permec N | | | | 1.5 | | | | 1.5 |
| | First metal-containing compounds (E-1) | 6% - Manganese octylate | 1.0 | 1.0 | 1.0 | | 1.0 | | 1.0 | |
| | | 8% -Cobalt octate | | | | 0.5 | | 0.7 | | 0.5 |
| | First thiol compounds (F-1) | Karenz MT (Trademark) BD 1 | 0.5 | 0.5 | 0.5 | | 0.5 | 0.3 | 0.5 | |
| | First Polymerization inhibitor (H-1) | Tertiary butyl catechol | 0.05 | 0.05 | 0.05 | | 0.05 | 0.05 | 0.05 | |
| | First curing retardant (1-1) | 4-H-TEMPO | 0.1 | 0.1 | 0.1 | | 0.1 | 0.15 | 0.1 | |

(continued)

| | | | Example 1 | Example 2 | Example 3 | Example 4 | Example 5 | Example 6 | Comparative Example 1 | Comparative Example 2 |
|---|---|---|---|---|---|---|---|---|---|---|
| | | Composition | PC-1 | PC-2 | PC-3 | PC-4 | PC-5 | PC-6 | cPC-1 | cPC-2 |
| Evaluation | Curing test | Gelation time(minutes) | 61 | 83 | 105 | 24 | 62 | 42 | 58 | 17 |
| | | Curing time (minutes) | 89 | 125 | 152 | 51 | 91 | 61 | 86 | 34 |
| | | Curing temperature(°C) | 78 | 69 | 58 | 138 | 75 | 97 | 84 | 153 |
| | Adhesion test on iron plate | | O | O | O | O | O | O | X | X |
| | Resin viscosity(mPa·s) | | 485 | 333 | 212 | 111 | 493 | 430 | 501 | 158 |

"Preparation of Second Radically Polymerizable Resin Composition"

(1) Resin Adjustment Step (2-S1):

A second metal containing compound (E-2), a second thiol compound (F-2), a second polymerization inhibitor (H-2) and a second curing retarder (1-2) were mixed well with a second radically polymerizable compound (A-2) and a second radically polymerizable unsaturated monomer (B-2) in the amounts shown in Table 1 to prepare the mixture (2-i).

(2) Curing Agent Mixing Step (2-S2):

The mixture (2-i) obtained in step (2-S1) was mixed with a second radical polymerization initiator (D-2) in the amount shown in Table 1 to prepare the mixture (2-ii).

(3) Aggregate Mixing Step (2-S3):

The expansive additive (J), the aggregate (K) and the fiber (L) were mixed well into the mixture (2-ii) obtained in step (2-S2) at each component and blend amount shown in Table 1 to obtain the second radically polymerizable resin composition of the present example.

The mixing conditions in each step are as follows.

Stirrer: HOMOGENIZING DISPER Model 2.5 (manufactured by Primix Corporation)
Stirring speed: 1000 to 5000 rpm
Temperature: 25°C

For the second radically polymerizable resin compositions RC-1 to RC-10 and cRC-1 to cRC-2 obtained by the above method at the amount of each raw material in Examples 7 to 16 and Comparative Examples 3 to 4 shown in Table 2, various evaluations were performed according to the following methods. The results are shown in Table 2.

[Table 2]

| | | | Example | | | | | | | | | | Comparative Example | |
|---|---|---|---|---|---|---|---|---|---|---|---|---|---|---|
| | | | 7 | 8 | 9 | 10 | 11 | 12 | 13 | 14 | 15 | 16 | 3 | 4 |
| | | Composition | RC-1 | RC-2 | RC-3 | RC-4 | RC-5 | RC-6 | RC-7 | RC-8 | RC-9 | RC-10 | cRC-1 | cRC-2 |
| Second radically polymerizable resin composition (repairing material) | Second radically polymerizable compound (A-2) | Radically polymerizable compound (A-iii) | 59.01 | | 59.01 | 59.01 | 59.01 | 59.01 | | | | | 59.01 | |
| | | Radicallypolymerizable compound (A-iv) | | 59.40 | | | | | | | | | | 59.40 |
| | | Radically polymerizable compound (A-v) | | | | | | | 39.34 | | | | | |
| | | Radically polymerizable compound (A- vi) | | | | | | | | 49.18 | | 49.40 | | |
| | | Radically polymerizable compound (A-vii) | | | | | | | | | 39.34 | | | |
| | | Styrene | | 39.60 | | | | | | | | | | 39.60 |
| | Second radically polymerizable unsaturated monomer (B-2) | Dicyclopentenyloxyethyl methacrylate | 29.51 | | 29.51 | 29.51 | 29.51 | 29.51 | 59.01 | 34.42 | 34.42 | 34.58 | 29.51 | |
| | | Dicyclopentanyl methacrylate | 9.84 | | 9.84 | 9.84 | 9.84 | 9.84 | | | | | 9.84 | |
| | | Phenoxyethyl methacrylate | | | | | | | | 14.75 | | 14.82 | | |
| | | Lauryl methacrylate | | | | | | | | | 14.75 | | | |

(continued)

| | | | Example | | | | | | | | | | Comparative Example | |
|---|---|---|---|---|---|---|---|---|---|---|---|---|---|---|
| | | | 7 | 8 | 9 | 10 | 11 | 12 | 13 | 14 | 15 | 16 | 3 | 4 |
| | | Composition | RC-1 | RC-2 | RC-3 | RC-4 | RC-5 | RC-6 | RC-7 | RC-8 | RC-9 | RC-10 | cRC-1 | cRC-2 |
| | Second radical polymerization initiator (D-2) | Parkmill H -80 | 2.0 | | 2.0 | 2.0 | 2.0 | 2.0 | 2.0 | 2.0 | 2.0 | | 2.0 | |
| | | Parkmill P | | | | | | | | | | 4.0 | | |
| | | Permec N | | 1.0 | | | | | | | | | | 1.0 |
| | Second metal-containing compounds (E-2) | 6% - Manganese octate | 1.0 | | 1.0 | 1.0 | 1.0 | 1.0 | 1.0 | 1.0 | 1.0 | | 1.0 | |
| | | 8% -Cobalt octate | | 1.0 | | | | | | | | 0.7 | | 1.0 |
| | Second thiol compounds (F-2) | Karenz MT BD1 | 0.5 | | 0.5 | 0.5 | 0.5 | 0.5 | 0.5 | 0.5 | 0.5 | 0.25 | 0.5 | |
| | Second polymerization inhibitor (H-2) | tertiary-butyl catechol | 0.05 | | 0.05 | 0.05 | 0.05 | 0.05 | 0.05 | 0.05 | 0.05 | 0.05 | 0.05 | |
| | | 2,6-di-tert-butyl -4 methylphenol | | 0.1 | | | | | | | | | | 0.1 |
| | Second curing retardant (1-2) | 4-H-TEMPO | 0.1 | | 0.1 | 0.1 | 0.1 | 0.1 | 0.1 | 0.1 | 0.1 | 0.15 | 0.1 | |
| | Expansive additive (1) | Denka Power CSA Type S | 12.0 | 12.0 | 4.0 | | 12.0 | 12.0 | 12.0 | 12.0 | 12.0 | | | |
| | | N-EX | | | | 12.0 | | | | | | 12.0 | | |
| | Aggregate (K) | No. 9 silica sand | 60.0 | 60.0 | 60.0 | 60.0 | 45.0 | 120.0 | 60.0 | 60.0 | 60.0 | 60.0 | 60.0 | 60.0 |
| | | Calcium Carbonate TM -2 | 60.0 | 60.0 | 60.0 | 60.0 | 45.0 | 120.0 | 60.0 | 60.0 | 60.0 | 60.0 | 60.0 | 60.0 |
| | | Perlite FL-0 | 8.0 | 8.0 | 8.0 | 8.0 | 6.0 | 16.0 | 8.0 | 8.0 | 8.0 | 8.0 | 8.0 | 8.0 |
| | | N50 silica sand | 180.0 | 180.0 | 180.0 | 180.0 | 135.0 | 360.0 | 180.0 | 180.0 | 180.0 | 180.0 | 180.0 | 180.0 |
| | | N40 silica sand | 40.0 | 40.0 | 40.0 | 40.0 | 30.0 | 80.0 | 40.0 | 40.0 | 40.0 | 40.0 | 40.0 | 40.0 |
| | | N70 silica sand | 50.0 | 50.0 | 50.0 | 50.0 | 37.5 | 100.0 | 50.0 | 50.0 | 50.0 | 50.0 | 50.0 | 50.0 |
| | Fiber (L) | KEMIBESTO FDSS -5 | 2.0 | 2.0 | 2.0 | 2.0 | 1.5 | 4.0 | 2.0 | 2.0 | 2.0 | 2.0 | 2.0 | 2.0 |

(continued)

| | | | Example | | | | | | | | | | Comparative Example | |
|---|---|---|---|---|---|---|---|---|---|---|---|---|---|---|
| | | | 7 | 8 | 9 | 10 | 11 | 12 | 13 | 14 | 15 | 16 | 3 | 4 |
| | | Composition | RC-1 | RC-2 | RC-3 | RC-4 | RC-5 | RC-6 | RC-7 | RC-8 | RC-9 | RC-10 | cRC-1 | cRC-2 |
| Evaluation | Compressive strength ($N/mm^2$) | 6 hours | 56 | 64 | 58 | 53 | 52 | 58 | 29 | 13 | 18 | 20 | 56 | 63 |
| | | 1 day | 69 | 76 | 67 | 69 | 61 | 68 | 37 | 18 | 20 | 21 | 68 | 74 |
| | | 3 days | 77 | 89 | 78 | 75 | 76 | 84 | 41 | 21 | 24 | 24 | 78 | 83 |
| | | 7 days | 80 | 91 | 82 | 81 | 77 | 95 | 44 | 22 | 27 | 30 | 81 | 91 |
| | Curing shrinkage (%) | 3 days later | -0.004 | -0.023 | -0.02 | 0.004 | -0.005 | -0.002 | -0.03 | -0.04 | -0.06 | -0.065 | -0.025 | -0.045 |
| | Rate of change (+ denotes expansion and - denotes shrinkage) | 28 days later | 0.035 | -0.008 | -0.01 | 0.06 | 0.02 | 0.05 | 0.028 | 0.021 | 0.031 | 0.018 | -0.04 | -0.05 |

<Curing Test (Measurements of Gelation Time, Curing Time and Curing Temperature)>

The first radically polymerizable resin compositions PC-1 to PC-6 and cPC-1 to cPC-2 of Examples 1 to 6 and Comparative Examples 1 to 2 described in Table 1 were placed in a test tube (outer diameter 18 mm, length 165 mm) from the bottom to 100 mm under conditions of 25°C, and the temperature was measured using a thermocouple.
The time which is taken for the temperature of the radically polymerizable resin composition to change from 25°C to 30°C was defined as the gelation time. In addition, the time from 25°C until the radically polymerizable resin composition reaches the maximum heat generation temperature is defined as the curing time, and the maximum heat generation temperature is defined as the curing temperature, which is measured according to JIS K 6901: 2008.
The radically polymerizable resin composition is adjusted to 25°C in advance before the measurement. The results are shown in Table 1.

< Adhesion Strength Test >

On an upper surface of a 300 mm × 300 mm × 5 mm stainless steel plate (SUS 304), each the first radically polymerizable resin composition (curable primer) obtained in Examples 1 to 6 and Comparative Examples 1 to 2 was applied with a brush at 150 g/$m^2$, cured at a temperature of 25°C and 50% humidity for 1 day, and then subjected to an adhesion strength test. The adhesion strength test was performed on each specimen using an Elcometer 106 Pull-Off Adhesion Tester manufactured by Elcometer Limited, and the average value of the 3 specimens was shown as the result. In the adhesion strength test, from the viewpoint of adhesion to the core, an adhesion strength of 1.0 N/$mm^2$ or more was evaluated as "O", and an adhesion strength of less than 1.0 N/$mm^2$ was evaluated as "X". The results are shown in Table 1.

< Viscosity Measurement >

Resin viscosity was measured using an E-type viscometer RE 85 U (manufactured by Toki Sangyo Co., Ltd.) and a cone plate 1°34'×R24 (standard) at 25°C and 50 rpm. The results are shown in Table 1.

< Compressive Strength Test >

The compressive strength values of the second radically polymerizable resin compositions (resin mortar compositions) RC-1 to RC-10 and cRC-1 to cRC-2 of Examples 7 to 16 and Comparative Examples 3 to 4 described in Table 2 were evaluated according to the following methods. The results are shown in Table 2.
The specimens for compressive strength testing were prepared in accordance with JIS A 1132: 2020. The dimensions of the specimens were 50 mm in diameter and 100 mm in height, and a steel mold was used to make the specimens. The test equipment was Shimadzu Concrete Compressive Strength Test Machine (CCM-1000 kNI) (manufactured by Shimadzu Corporation), and the test was conducted 6 hours, 1 day, 3 days and 7 days after each specimen was made.

< Measurement Method of Curing Shrinkage >

The shrinkage and expansion ratio (rate of change: negative is shrinkage rate, positive is expansion rate) after curing was measured for the cured product of the second radically polymerizable resin composition according to Japanese Standard JIS A 1129-3 (dial gauge method). Moldings (cured products) were formed according to Appendix A of Japanese Standard JIS A 1129. The formwork used was 40 × 40 × 160 mm as specified in Japanese Standard JIS R 5201. Cured specimens were molded according to the method for making specimens for strength testing as specified in 10 of JIS R 5201, and after molding, the specimens were left in the formwork and allowed to stand (cure) in a room with a temperature of 23°C +/- 2°C and a humidity of 50%, and were demolded about 24 hours after molding. Measurements were then started using the instruments indicated in 3 of JIS A 1129-3 under the conditions indicated in 4.3 of JIS A 1129-3 (with time 0).

Amount of Change (negative: amount of shrinkage, positive: amount of expansion) = Length of the long side over time - Length of the long side at the start (0:00) (160 mm) (1)

Percent Change (negative: shrinkage rate, positive: expansion rate) = Amount of change / Length of long side at start (0:00) (160 mm) (2)

The results are shown in Table 2.

< Combination of First Radically Polymerizable Compound and Second Radically Polymerizable Composition >

The combined test methods and results of the first and second radically polymerizable compounds are described below.

(Examples 17 to 23, Comparative Examples 5 to 6)

< Five-Face Restraint Test >

The concrete mold used for the five-face restraint test was Zero Cube L (10 cm × 10 cm × 9 cm (height)) of Ohmi Chemical Trading Co., Ltd. (Aalde). Since the pot is used for garden plants, the bottom has a hole about 2 cm in diameter.

When conducting the simple five-face restraint test described below, using a suitable slab of concrete to block the bottom hole before use.

The obtained first radically polymerizable resin composition (primer composition) PC-1, PC-2, PC-4, PC-6, cPC-1 and the second radically polymerizable resin composition (resin mortar composition) RC-1, RC-2, RC-7, RC-8, RC-9, RC-10, cRC-1 were used. First, an inner wall of the above concrete side was coated with a first radically polymerizable resin composition at a coating amount of 0.3 kg/$m^2$. Then, the second radically polymerizable resin composition was packed without gaps and cured at 25°C for 24 hours to prepare the test specimen. The specimens were evaluated according to the following criteria. Next, as a dry/wet repeated test, the test pieces after 30 cycles of dry conditions (temperature 15°C, humidity 60% for 4 days) and wet conditions (temperature 60°C, humidity 90% for 3 days) were evaluated according to the following evaluation criteria. In the same manner, as a warm and cold repetition test, the test pieces after 30 cycles of one cycle of submersion condition (temperature 25°C, water curing for 18 hours), cooling condition (temperature -20°C for 3 hours) and heating condition (temperature 50°C for 3 hours) were evaluated according to the following evaluation criteria.

For each of the combinations of Examples 17 to 23 and Comparative Examples 5 to 6 shown in Table 3, the five-face restraint test was evaluated according to the above method. The evaluation criteria are as follows:
Cracks and peeling should be checked visually, and floating should be judged by the level of the sound after a hammering test. (If there is floating, the sound will be high when struck.)

O: Resin mortar should remain bonded to the five contacted faces, and there should be no cracks or floats on the concrete structure side. Also, there should be no peeling on the side of the resin mortar and primer.
Δ: Resin mortar remains bonding to the five contacted faces, but cracks or floats are seen on one surface of the concrete structure side.
X: Cracks and floats are present on two or more among the five faces (bonding). Also, peeling can be seen on one or more faces.

The results are shown in Table 3.

[Table 3]

| | | Example 17 | Example 18 | Example 19 | Example 20 | Example 21 | Example 22 | Example 23 | Comparative Example 5 | Comparative Example 6 |
|---|---|---|---|---|---|---|---|---|---|---|
| First radically polymerizable resin composition (curable primer) | | PC-1 | PC-2 | PC-4 | PC-2 | PC-1 | PC-1 | PC-6 | cPC-1 | PC-1 |
| Second radical polymerizable resin composition (resin mortar composition) | | RC-1 | RC-2 | RC-2 | RC-7 | RC-8 | RC-9 | PC-10 | RC-1 | cRC-1 |
| Five-face restraint test | Normal | O | O | O | O | O | O | O | O | O |
| | After repeated drying and humidity | O | O | O | O | O | O | O | O | X |
| | After repeated heating and cooling | O | O | O | O | O | O | O | O | X |
| Reinforcing steel pull-out test Maximum bond stress ($N/mm^2$) | Normal | O 5.5 | O 5.1 | O 5.1 | O 3.4 | O 2.2 | O 2.5 | O 2.3 | X 1.6 | O 5.2 |
| | After repeated drying and humidity | O 4.5 | O 4.4 | O 4.6 | O 3.2 | O 2.0 | O 2.5 | O 2.3 | X 1.1 | O 4.6 |
| | After repeated heating and cooling | O 4.4 | O 4.1 | O 4.4 | O 3.0 | O 2.1 | O 2.2 | O 2.4 | X 0.7 | O 4.7 |

(Reinforcing Steel Pull-Out Test)

"Method of Preparing Specimen"

As shown in Fig. 1, a formwork (2) with a side of 10 cm was prepared according to JSTM C 2101 T (strength test method for reinforcing steel and concrete by pull-out test). A deformed reinforcing steel (1) D 16 coated with the above first radically polymerizable composition (curable primer) (3a) was placed in the formwork (2). In that state, a second radically polymerizable composition (4a) was packed without gaps in the formwork (2).

After 24 hours of curing, the formwork (2) was removed to obtain specimens. The obtained specimens were subjected to a reinforcing steel pull-out test according to the following evaluation method and evaluation criteria. In the same way, the reinforcing steel pull-out test was also carried out on the specimens after 30 cycles of repeated dry and wet test; and dry conditions (temperature 15°C, humidity 60% for 4 days) and wet conditions (temperature 60°C, humidity 90% for 3 days) were set as 1 cycle. In addition, the reinforcing steel pull-out test was also carried out on the test pieces after 30 cycles of repeated hot and cold tests; and submersion conditions (temperature 25°C, water curing for 18 hours), cooling conditions (3 hours at a temperature of -20°C), and heating conditions (3 hours at a temperature of 50°C) were set as one cycle.

"Testing Equipment"

Measurements were carried out using an Amsler universal testing machine (MR type) of Maekawa Testing Machine MFG. Co., LTD.

"Test Methods"

The tensile load was measured by JSTM C 2101 T, and the bond stress was calculated by the following equation (3). The tensile load used to calculate the bond stress was measured when the sliding amount of the free end was 0.002 D (D is the diameter of the reinforcing steel).

$$\gamma = P/(4\pi D^2) \times \alpha \qquad (3)$$

$\gamma$: bond stress (N/mm2)
P: tensile load (N)
D: diameter of reinforcing steel (nominal diameter; 16 mm for D 16)
$\alpha$: correction factor for compressive strength of concrete (30/$\sigma$c)
$\sigma$c: compressive strength (N/$mm^2$) of cylindrical specimens simultaneously prepared

"Method of Evaluating Test Results"

"O" denotes bond stress of 2.0 N/$mm^2$ or more when the slip amount of the reinforcing steel is 0.002 D (= 0.032 mm), which is regarded as the acceptable value of JSTM C 2101 T. Less than 2.0 N/$mm^2$ was denoted as "X". In addition, the maximum bond stress is indicated numerically. The results are shown in Table 3.

In the above hole-filling method, it is described as a hole-filling material for bolt boxes, but as an application, it can also be applied to a method for repairing defects in concrete structures such as box culverts and channels.

(Description of signs)

1 Reinforcing steel

2 Formwork

3a First radically polymerizable composition

3b Cured product of first radically polymerizable composition

4a Second radically polymerizable composition

4b Cured product of second radically polymerizable composition

5 Container

**Claims**

1. A recess filling material kit, comprising a first radically polymerizable resin composition and a second radically polymerizable resin composition,

   wherein the first radically polymerizable resin composition comprises a first radically polymerizable compound (A-1), a first radically polymerizable unsaturated monomer (B-1), an acidic compound (C), and a first radical polymerization initiator (D-1), and
   the second radically polymerizable resin composition comprises a second radically polymerizable compound (A-2), a second radically polymerizable unsaturated monomer (B-2), a second radical polymerization initiator (D-2), an expansive additive (J), and an aggregate (K).

2. The recess filling material kit according to claim 1, wherein an amount of the aggregate (K) is 200 to 900 parts by mass with respect to a total of 100 parts by mass of the second radically polymerizable compound (A-2) and the second radically polymerizable unsaturated monomer (B-2).

3. The recess filling material kit according to claim 1 or 2, wherein the first radically polymerizable compound (A-1) and the second radically polymerizable compound (A-2) each independently comprises a vinyl ester resin.

4. The recess filling material kit according to any one of claims 1 to 3, wherein the expansive additive (J) includes at least one selected from the group consisting of quicklime and calcium sulfoaluminate.

5. The recess filling material kit according to any one of claims 1 to 4, wherein the first radical polymerization initiator (D-1) and the second radical polymerization initiator (D-2) are each independently hydroperoxides.

6. The recess filling material kit according to any one of claims 1 to 5, wherein the first radically polymerizable resin composition further compriese a first metal-containing compound (E-1) and a first thiol compound (F-1), and
   the second radically polymerizable resin composition further contains a second metal-containing compound (E-2) and a second thiol compound (F-2).

7. The recess filling material kit according to any one of claims 1 to 6, wherein the expansive additive (J) is 0.3 to 30 parts by mass with respect to a total of 100 parts by mass of the second radically polymerizable compound (A-2) and the second radically polymerizable unsaturated monomer (B-2).

8. The recess filling material kit according to any one of claims 1 to 7, wherein an amount of the first radical polymerization initiator (D-1) is 0.1 to 10 parts by mass with respect to a total of 100 parts by mass of the first radically polymerizable compound (A-1) and the first radically polymerizable unsaturated monomer (B-1), and
   an amount of the second radical polymerization initiator (D-2) is 0.1 to 10 parts by mass with respect to a total of 100 parts by mass of the second radically polymerizable compound (A-2) and the second radically polymerizable unsaturated monomer (B-2).

9. The recess filling material kit according to any one of claims 1 to 8, wherein the amount of the acidic compound (C) is 1 to 20 parts by mass with respect to a total of 100 parts by mass of the first radically polymerizable compound (A-1) and the first radically polymerizable unsaturated monomer (B-1) in the first radically polymerizable resin composition.

10. The recess filling material kit according to any one of claims 1 to 9, wherein the acidic compound (C) is an unsaturated monobasic acid.

11. The recess filling material kit according to any one of claims 1 to 10, wherein the first radical polymerization initiator (D-1) is a photoradical polymerization initiator having photosensitivity from an ultraviolet to a visible light region.

**12.** A cured product of a recess filling material kit according to any one of claims 1 to 11, which is obtained by forming a first cured product of the first radically polymerizable resin composition on a surface of the recess, and forming a second cured product of the second radically polymerizable resin composition on a surface of the first cured product.

**13.** A recess filling method for filling a recess using a recess filling material kit according to any one of claims 1 to 11, the method comprising:

an underlayer forming step of coating a surface of the recess with the first radically polymerizable resin composition to form an underlayer; and
a filling step of filling the second radically polymerizable resin composition on a surface of the underlayer formed on the surface of the recess.

**14.** The recess filling method according to claim 13, wherein the recess is a bolt box.

FIG. 1

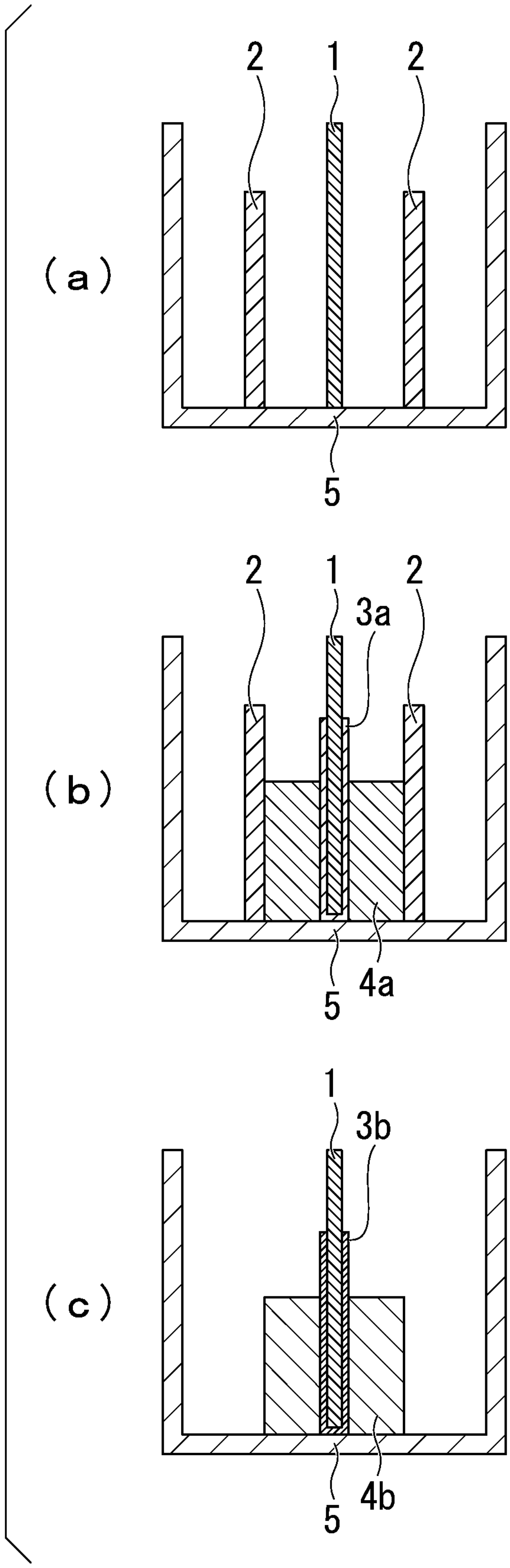

## INTERNATIONAL SEARCH REPORT

International application No.
**PCT/JP2022/018284**

**A. CLASSIFICATION OF SUBJECT MATTER**

***C04B 26/18***(2006.01)i; ***C04B 22/06***(2006.01)i; ***C04B 22/14***(2006.01)i; ***C08F 290/06***(2006.01)i; ***E21D 11/04***(2006.01)i
FI: C04B26/18 A; C04B22/06 Z; C04B22/14 D; C08F290/06; E21D11/04 A

According to International Patent Classification (IPC) or to both national classification and IPC

**B. FIELDS SEARCHED**

Minimum documentation searched (classification system followed by classification symbols)

E21D11/04-11/12; E04G23/02-23/03; C09K3/10; C08F290/06; C04B26/02-26/28; C04B41/00-41/91

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/066363 A1 (SHOWA DENKO K.K.) 02 April 2020 (2020-04-02) claims | 1-14 |
| A | WO 2019/021560 A1 (SHOWA DENKO K.K.) 31 January 2019 (2019-01-31) claims | 1-14 |
| A | JP 2019-26789 A (ASAHI KASEI CORP.) 21 February 2019 (2019-02-21) claims, paragraphs [0007], [0008] | 1-14 |
| P, A | WO 2021/132139 A1 (SHOWA DENKO K.K.) 01 July 2021 (2021-07-01) claims | 1-14 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/018284**

| Patent document cited in search report | Publication date (day/month/year) | Patent family member(s) | Publication date (day/month/year) |
|---|---|---|---|
| WO 2020/066363 A1 | 02 April 2020 | EP 3858805 A1<br>claims<br>US 2021/0283655 A1<br>CN 112789259 A | |
| WO 2019/021560 A1 | 31 January 2019 | JP 2020-169437 A | |
| JP 2019-26789 A | 21 February 2019 | (Family: none) | |
| WO 2021/132139 A1 | 01 July 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021073533 A
- JP 2700609 B
- JP 2001270765 A
- JP 3479819 B
- JP 2020094192 A
- JP 2019052203 A
- JP 11315198 A
- JP 2794802 B
- JP 5222282 A

### Non-patent literature cited in the description

- **TAKESHI ENDO.** *Possibility to Avoid Shrinkage during Polymerization, Kobunshi,* 1978, vol. 27 (2), 108-111